**Europäisches Patentamt**

**European Patent Office**

**Office européen des brevets**

(19) 

(11) Veröffentlichungsnummer : **0 026 877**
**B1**

(12) **EUROPÄISCHE PATENTSCHRIFT**

(45) Veröffentlichungstag der Patentschrift :
**05.10.83**

(21) Anmeldenummer : **80105758.9**

(22) Anmeldetag : **25.09.80**

(51) Int. Cl.³ : **G 06 F 15/336**, G 06 G 7/19,
G 01 P 5/18

(54) **Verfahren und Anordnung zur Korrelation von zwei Signalen.**

(30) Priorität : **03.10.79 DE 2940158**
**12.08.80 DE 3030438**

(43) Veröffentlichungstag der Anmeldung :
**15.04.81 Patentblatt 81/15**

(45) Bekanntmachung des Hinweises auf die Patenterteilung : **05.10.83 Patentblatt 83/40**

(84) Benannte Vertragsstaaten :
**CH FR GB IT LI NL SE**

(56) Entgegenhaltungen :
**DE A 2 440 530**
**DE A 2 633 565**
**FR A 2 206 872**
**US A 3 965 338**

**ELECTRONICS LETTERS, Band 8, Nr. 24, 30.**
**November 1972, Hitchin, GB, JORDAN et al. :**
**« Correlation - function display and peak detec-**
**tion », Seiten 602-604**

**JOURNAL OF PHYSICS E. SCIENTIFIC INSTRU-**
**MENTS, Band 10, Nr. 8, August 1977, London, GB,**
**POINTON : « The Jodrell bank 1024-channel digi-**
**tal autocorrelation spectrometer », Seiten 833-**
**837**

**Microelectronics Journal, Bd. 10, Nr. 1, 7. Juni 79,**
**Luton, GB, Jordan : « A correlation interface cir-**
**cuit for microprocessor systems », Seiten 54-56**

(73) Patentinhaber : **Endress u. Hauser GmbH u.Co.**
**Hauptstrasse 1**
**D-7867 Maulburg (DE)**

(72) Erfinder : **Massen, Robert, Dr.**
**Kämpfenstrasse 39**
**D-7760 Radolfzell 18 (DE)**
Erfinder : **Merkel, Jürgen**
**Neue Strasse 29C**
**D-7867 Maulburg (DE)**
Erfinder : **Lindner, Klaus-Peter**
**Gartenstrasse 6**
**D-7881 Schwörstadt (DE)**

(74) Vertreter : **Leiser, Gottfried, Dipl.-Ing. et al**
**Patentanwälte Prinz, Bunke & Partner Ernsberger**
**Strasse 19**
**D-8000 München 60 (DE)**

# 0 026 877

## Verfahren und Anordnung zur Korrelation von zwei Signalen

Die Erfindung bezieht sich auf ein Verfahren zur Korrelation von zwei Signalen, bei welchem gegeneinander zeitverschobene Abtastwerte der beiden Signale miteinander multipliziert werden und zur Bestimmung eines Stützwerts der Korrelationsfunktion der Mittelwert der der gleichen Zeitverschiebung entsprechenden Multiplikationsergebnisse gebildet wird, wobei die jeweils n letzten Abtastwerte des zweiten Signals gespeichert werden, jeder Abtastwert des ersten Signals gleichzeitig mit den n gespeicherten Abtastwerten des zweiten Signals multipliziert wird und die jeweils der gleichen Zeitverschiebung zwischen den multiplizierten Abtastwerten entsprechenden Multiplikationsergebnisse getrennt summiert werden.

Die Korrelation von zwei verschiedenen Signalen (Kreuzkorrelation) sowie die Korrelation eines Signals mit dem gleichen, jedoch zeitverschobenen Signal (Autokorrelation) findet auf vielen Gebieten Auwendung, um entweder Aufschlüsse über bestimmte Eigenschaften der Signale zu erhalten oder um eine Vorhersage über das zukünftige Verhalten der Signale zu gewinnen. Ein bekanntes Anwendungsgebiet der Korrelationstechnik ist die berührungslose Geschwindigkeitsmessung an bewegten Objekten und Fluiden, die in vielen Zweigen der Verfahrens- und Automatisierungstechnik erforderlich ist. Beispiele sind die Durchflußmessung bei Mehrphasenströmungen oder bei Feststofftransporten in Rohrleitungen. Hierbei wird die Tatsache ausgenutzt, daß man aus den strömenden Medien oder von bewegten Oberflächen mit zwei in vorbestimmtem Abstand voneinander in der Strömungsrichtung angeordneten optischen, akustischen oder kapazitiven Sensoren Rauschsignale gewinnen kann, aus denen man mit Hilfe der Korrelationsanalyse auf die Laufzeit der Strömung des Mediums oder der bewegten Oberfläge zwischen den beiden Sensoren schließen kann. Die dem Maximum der Kreuzkorrelationsfunktion entsprechende Zeitverschiebung zwischen den korrelierten Signalen ist nämlich gleich der Laufzeit vom ersten Sensor zum zweiten Sensor.

Zur Vereinfachung der Signalverarbeitung im Korrelator ist es bekannt, die Korrelation nicht an den kontinuierlichen Analogsignalen vorzunehmen, sondern an diskreten, in vorbestimmten Zeitabständen entnommenen Abtastwerten, die vorzugsweise in eine digitale Form gebracht werden. Eine weitere bekannte Vereinfachung besteht darin, daß als Signalwerte lediglich die Vorzeichen der Sensorsignale in einem sogenannten Polaritätskorrelator ausgewertet werden. In diesem Fall sind die Abtastwerte dann binäre Signale, die nur den einen oder den anderen von zwei Signalwerten annehmen.

Ein mit binären Signalen arbeitendes Verfahren der eingangs angegebenen Art, das insbesondere zur Durchflußmessung bestimmt ist, ist aus der DE-A-2 440 530 bekannt.

Bei diesem bekannten Verfahren werden die beiden Signale mit der gleichen Abtastfrequenz abgetastet. Die Abtastwerte des zweiten Signals werden in die erste Stufe eines n-stufigen Schieberegisters eingegeben, und der in jeder Schieberegisterstufe gespeicherte Abtastwert wird im Takt der Abtastfrequenz in die nächste Schieberegisterstufe weitergeschoben. Jeder Schieberegisterstufe ist ein Koinzidenzdetektor zugeordnet, und jeder Abtastwert des ersten Signals wird in allen Koinzidenzdetektoren gleichzeitig mit den n gespeicherten Abtastwerten des zweiten Signals verglichen. An den Ausgang jedes Koinzidenzdetektors ist ein Zähler angeschlossen, in dem die die Koinzidenz anzeigenden Ausgangssignale des Koinzidenzdetektors gezählt werden. Jeder Zähler bildet somit einen Speicher zur Bildung eines Stützwerts der Korrelationsfunktion zwischen den beiden Signalen, wobei die dem Stützwert zugeordnete Zeitverschiebung gleich der Zeitverzögerung ist, die dem Abtastwert im Schieberegister bis zur Eingabe in die dem Zähler zugeordnete Schieberegisterstufe erteilt worden ist. Eine zusätzliche Einrichtung stellt fest, welcher Zähler zuerst einen vorbestimmten Zählerstand erreicht. Die diesem Zähler zugeordnete Zeitverschiebung gibt dann die Lage des Korrelationsmaximums an. Dieses bekannte Verfahren arbeitet wegen des gleichzeitigen Vergleichs mehrerer Abtastwerte verhältnismäßig schnell, doch ist der erforderliche Schaltungsaufwand beträchtlich, weil für jeden zu bildenden Stützwert der Korrelationsfunktion eine Schieberegisterstufe und ein Koinzidenzdetektor benötigt wird. Zur Verringerung des Schaltungsaufwands besteht eine Weiterbildung des bekannten Verfahrens darin, daß mehrere Schieberegister in Reihe geschaltet sind und die Fortschaltefrequenzen der aufeinanderfolgenden Schieberegister nach einer geometrischen Reihe abgestuft sind. Die Anzahl der für einen gegebenen Zeitverzögerungsbereich erforderlichen Schieberegisterstufen, Koinzidenzdetektoren und Zähler ist dann geringer, doch wird diese Verringerung des Schaltungsaufwands mit einer verschlechterten Auflösung bei der Korrelation der beiden Signale erkauft, weil auch die Anzahl der berechneten Stützwerte entsprechend kleiner ist.

Der zur Durchführung des bekannten Verfahrens erforderliche Schaltungsaufwand würde noch erheblich mehr ins Gewicht fallen, wenn das Verfahren nicht mit binären Polaritätssignalen arbeiten würde, sondern mit Analog-Abtastwerten oder mit Abtastwerten in Form von mehrstelligen digitalen Codewörtern. In diesem Fall müßten die Schieberegisterstufen durch Speicherplätze ersetzt werden, die für die Speicherung von Analogwerten oder von mehrstelligen Digitalwörtern geeignet wären, und die Koinzidenzschaltungen müßten durch Multiplizierer ersetzt werden, die für die Multiplikation solcher Analogwerte oder Digitalwörter geeignet wären.

Andere bekannte Korrelatoren, die seriell arbeiten, ermöglichen zwar die Berechnung der Korrelationsfunktion mit verhältnismäßig geringem Schaltungsaufwand mit jeder gewünschten Auflösung, sie benötigen jedoch eine entsprechend lange Rechenzeit.

Aufgabe der Erfindung ist die Schaffung eines Verfahrens, das die schnelle und sichere Korrelation von zwei Signalen mit einem im Verhältnis zur Anzahl der berechneten Stützwerte geringen Schaltungsaufwand ermöglicht, sowie einer Anordnung zur Durchführung des Verfahrens.

Ausgehend von dem eingangs angegebenen Verfahren wird diese Aufgabe nach der Erfindung dadurch gelöst, daß das erste Signal mit einer Abtastfrequenz abgetastet wird, die ein Vielfaches k der Abtastfrequenz ist, mit der das zweite Signal abgetastet wird, und daß die in jedem einer Abtastperiode des zweiten Signals entsprechenden Abtastzyklus durch gleichzeitige Multiplikation der n gespeicherten Abtastwerte mit jedem der k aufeinanderfolgenden Abtastwerte des ersten Signals erhaltenen $m = k \cdot n$ Multiplikationsergebnisse in m Speicherplätzen, die den $m = k \cdot n$ unterschiedlichen Zeitverschiebungen zwischen den multiplizierten Abtastwerten zugeordnet sind, getrennt summiert werden.

Infolge der Anwendung von zwei verschiedenen Abtastfrequenzen in der vorstehend angegebenen Weise ergibt sich bei dem erfindungsgemäßen Verfahren in jedem Abtastzyklus eine fortschreitende Zeitverschiebung zwischen jedem der n gespeicherten Abtastwerte des langsamer abgetasteten Signals und den damit nacheinander multiplizierten Abtastwerten des schneller abgetasteten Signals. Zur Bestimmung von m Stützwerten der Korrelationsfunktion werden daher nur $n = m : k$ Multiplizierer und die gleiche Anzahl von Speicherstellen für die Speicherung der Abtastwerte benötigt. Dennoch arbeitet das Verfahren wegen der parallelen Multiplikation mehrerer Abtastwerte sehr schnell.

Eine bevorzugte Ausführungsform einer Anordnung zur Durchführung des Verfahrens ist nach der Erfindung gekennzeichnet durch Einrichtungen zur Abtastung der beiden Signale im Frequenzverhältnis $1 : k$, ein Schieberegister mit n Stufen zur Speicherung der n letzten Abtastwerte des langsamer abgetasteten Signals, n Multiplizierschaltungen, die an einem Eingang jeweils den Inhalt einer Schieberegisterstufe und am anderen Eingang parallel die Abtastwerte des schneller abgetasteten Signals empfangen, einen Summationsspeicher mit $m = k \cdot n$ Speicherplätzen, eine Verteilerschaltung zur Eingabe der von den Multiplizierschaltungen gelieferten Multiplikationsergebnisse in die den betreffenden Zeitverschiebungen zugeordneten Speicherplätze unter Addition zu dem vorhergehenden Inhalt, und durch Einrichtungen zur Eingabe der Abtastwerte des langsamer abgetasteten Signals in die erste Schieberegisterstufe und zur Verschiebung des Inhalts jeder Schieberegisterstufe in die nächste Schieberegisterstufe im Takt der niedrigeren Abtastfrequenz.

Eine solche Anordnung kann auf einfache Weise mit handelsüblichen integrierten Analog- oder Digitalschaltungen aufgebaut werden. Eine besonders vorteilhafte Ausführungsform besteht darin, daß die Verteilerschaltung und der Speicher durch einen Mikrocomputer gebildet sind.

Eine vorteilhafte Weiterbildung des Verfahrens nach der Erfindung besteht darin, daß jeweils in einer ersten Phase jedes von mehreren aufeinanderfolgenden Abtastzyklen die in jeder Abtastperiode der schnelleren Abtastung gleichzeitig erhaltenen n Multiplikationsergebnisse im Takt der schnellen Abtastung parallel in einen Pufferspeicher eingeschrieben werden, und daß in einer zweiten Phase jedes Abtastzyklus die im Pufferspeicher gespeicherten Multiplikationsergebnisse in einem der Arbeitgeschwindigkeit des die m Speicherplätze enthaltenden Summationsspeichers angepaßten Takt aus dem Pufferspeicher ausgelesen und auf die m Speicherplätze verteilt werden.

Bei dieser Weiterbildung des Verfahrens nach der Erfindung ist die Frequenz der schnellen Abtastung unabhängig von der Arbeitsfrequenz des Summationsspeichers und nur durch die Geschwindigkeit bestimmt, mit der die Multiplikationsergebnisse in den Pufferspeicher eingegeben werden können. Selbst wenn man unterstellen würde, daß der Pufferspeicher nicht schneller arbeitet als der Summationsspeicher, würde dies bereits eine Vervielfachung der Abtastfrequenz um den Faktor n bedeuten, weil jeweils n Multiplikationsergebnisse parallel in den Pufferspeicher eingegeben werden. Darüber hinaus ergibt sich aber eine weitere Erhöhung der maximal möglichen Abtastfrequenz, weil die Gruppen von Multiplikationsergebnissen in den Pufferspeicher unsortiert in aufeinanderfolgende Speicherplätze eingegeben werden können und nicht zu dem vorhergehenden Inhalt addiert werden müssen.

Die Berechnung der gesamten Korrelationsfunktion erfolgt etwa in der gleichen Zeit wie bei direkter Eingabe der Multiplikationsergebnisse in den Summationsspeicher, jedoch aufgrund von Abtastwerden, die mit einer sehr viel höheren Abtastfrequenz erhalten werden. Insbesondere bei der Ausführung als Polaritätskorrelator, bei welcher die Multiplikationsergebnisse 1-Bit-Zahlen sind, erreicht man mit handelsüblichen Mikrocomputerbauelementen ohne weiteres Abtastfrequenzen von etwa 50 kHz.

Vorteilhafte Ausgestaltungen und Weiterbildungen des Verfahrens nach der Erfindung sowie der Anordnung zur Durchführung des Verfahrens sind in den Unteransprüchen gekennzeichnet.

Weitere Merkmale und Vorteile der Erfindung ergeben sich aus der folgenden Beschreibung eines Ausführungsbeispiels anhand der Zeichnung. In der Zeichnung zeigt :

Figur 1  das Schema einer Anordnung zur korrelativen Messung der Strömungsgeschwindigkeit eines in einer Rohrleitung strömenden Mediums,

Figur 2  das Blockschaltbild des Korrelators der Anordnung von Fig. 1,

Figur 3  ein Diagramm zur Veranschaulichung der Berechnung der Korrelationsfunktion mit dem Korrelator von Fig. 2,

Figur 4  eine abgeänderte Ausführungsform der Anordnung von Fig. 1,

Figur 5  das Blockschaltbild einer abgeänderten Ausführungsform des Korrelators von Fig. 2,

Figur 6  ein detaillierteres Schaltbild eines Teils des Korrelators von Fig. 5 und

Figur 7  ein Ausführungsbeispiel des Adressenrechners des Korrelators von Fig. 5.

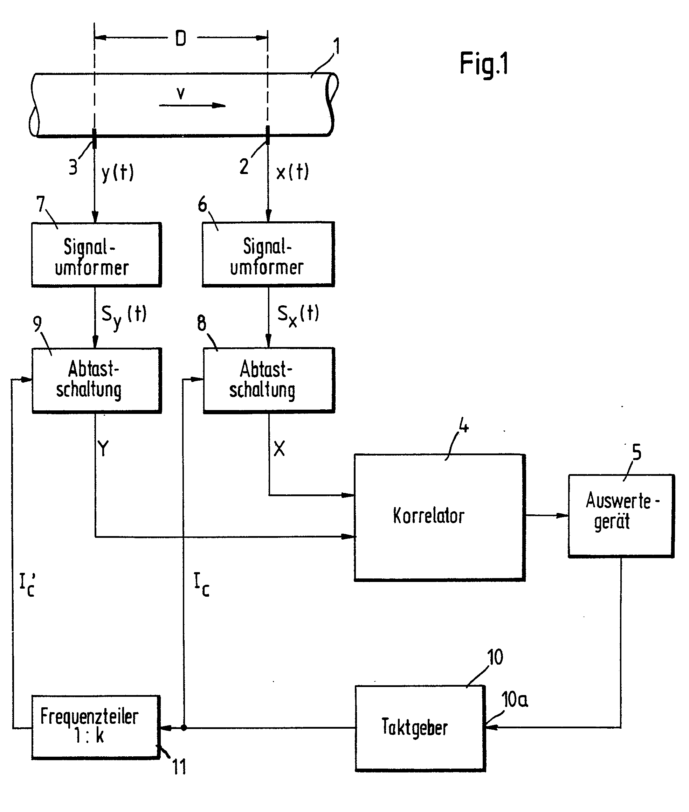

Figur 1 zeigt als Anwendungsbeispiel für ein Korrelationssystem eine Anordnung zur Messung der Strömungsgeschwindigkeit v eines Mediums in einer Rohrleitung 1. An der Rohrleitung 1 sind in einem genau bekannten Abstand D zwei Sensoren 2 und 3 angebracht, die aus dem strömenden Medium Rauschsignale gewinnen und entsprechende elektrische Signale x(t) bzw. y(t) liefern. Die Sensoren können beliebiger Art sein, beispielsweise optische, akustische oder kapazitive Sensoren.

Es ist bekannt, daß durch Bildung der Kreuzkorrelationsfunktion $R_{..}(\tau)$ zwischen den beiden Signalen x(t) und y(t) die Strömungsgeschwindigkeit v in der Rohrleitung 1 ermittelt werden kann. Dies beruht darauf, daß die beim Vorbeigang der gleichen Strömungsbestandteile (Wirbel) an den beiden Sensoren 2 und 3 erzeugten Signale gewisse Ähnlichkeiten aufweisen, die ein Maximum in der Kreuzkorrelationsfunktion ergeben. Die Kreuzkorrelationsfunktion hat die mathematische Form

$$R_{..}(\tau) = \lim_{T \to \infty} \frac{1}{T} \int_0^T x(t)\, y(t + \tau)\, dt.$$

Sie bedeutet, daß die Augenblickswerte des Signals x(t) mit den um eine Verschiebungszeit $\tau$ verschobenen Augenblickswerten des Signals y(t) multipliziert werden und der Mittelwert der Produkte über den Bereich der Beobachtungszeit T gebildet wird. Für jeden Wert der Verschiebungszeit $\tau$ erhält man einen Stützwert der Korrelationsfunktion. Bei dem hier angegebenen Anwendungsfall hat die Korrelationsfunktion ein Maximum bei einer bestimmten Verschiebungszeit $\tau_{..}$, die gleich der Laufzeit des Mediums vom Sensor 3 zum Sensor 2 ist, wenn also gilt :

$$\tau_{..} = D/v.$$

Die Ermittlung der Korrelationsfunktion erfolgt durch einen Korrelator 4. Ein an den Korrelator 4 angeschlossenes Auswertegerät 5 untersucht die Korrelationsfunktion auf ein Maximum und gibt die entsprechende Verschiebungszeit $\tau_{..}$ oder die daraus errechnete Strömungsgeschwindigkeit v aus.

Bei dem dargestellten Beispiel berechnet der Korrelator 4 die Korrelationsfunktion nicht unmittelbar aus den analogen Signalen x(t) und y(t), sondern zur Vereinfachung nach einem an sich bekannten Verfahren aus deren Vorzeichen ; es handelt sich also um einen sogenannten Polaritätskorrelator. Zu diesem Zweck ist dem Sensor 2 ein Signalsumformer 6 nachgeschaltet, der am Ausgang ein binäres Signal $S_x(t)$ abgibt, das einen dem Binärwert 0 entsprechenden Signalwert (beispielsweise die Spannung Null) annimmt, wenn das Signal x(t) negativ ist, und einen dem Binärwert 1 entsprechenden Signalwert (beispielsweise einen positiven Spannungswert), wenn das Signal x(t) positiv ist. Zur Vereinfachung sollen diese Signalwerte nachfolgend als « Signalwert 0 » bzw. « Signalwert 1 » bezeichnet werden. In entsprechender Weise ist dem Sensor 3 ein Signalumformer 7 nachgeschaltet, der am Ausgang ein binäres Signal $S_y(t)$ abgibt, das entsprechend dem Vorzeichen des Signals y(t) entweder den Signalwert 0 oder den Signalwert 1 annimmt. Jeder Signalumformer 6, 7 kann, wie an sich bekannt, ein Schwellenwertgeber sein, der beispielsweise durch einen nicht rückgekoppelten Operationsverstärker gebildet ist, und dessen Schwellenwert auf Null eingestellt ist. Es ist auch möglich, einen von Null verschiedenen Schwellenwert zu wählen ; in diesem Fall erhält man am Ausgang jedes Signalumformers 6, 7 ebenfalls ein binäres Signal, das aber kein Vorzeichensignal ist.

Schließlich wird bei der dargestellten Anordnung von der an sich bekannten Maßnahme Gebrauch gemacht, die Korrelation an einer begrenzten Anzahl von diskreten Abtastwerten der zu korrelierenden Signale vorzunehmen. Um dies zu verdeutlichen, sind in Fig. 1 zwei Abtastschaltungen 8, 9 dargestellt, die zwischen die Ausgänge der Signalumformer 6, 7 und den Korrelator 4 eingefügt sind und durch Taktimpulse gesteuert werden, die von einem Taktgeber 10 geliefert werden. Die Abtastschaltungen 8, 9 sind so ausgebildet, daß sie jeweils beim Empfang eines Taktimpulses den am Signaleingang anliegenden Signalwert speichern und bis zum nächsten Taktimpuls am Ausgang als Abtastwert X bzw. Y zur Verfügung stellen. Eine Besonderheit der später genauer beschriebenen Korrelationsanordnung besteht darin, daß die Abtastung der beiden Signale $S_x(t)$ und $S_y(t)$ mit unterschiedlichem Takt erfolgt : während die vom Taktgeber 10 mit der Folgefrequenz $f_c$ gelieferten Taktimpulse I. an die Abtastschaltung 8 direkt angelegt werden, empfängt die Abtastschaltung 9 diese Taktimpulse über einen Frequenzteiler 11 mit dem Teilerverhältnis 1 : k, so daß die Abtastschaltung 9 durch Taktimpulse I.' mit der Folgefrequenz $f_c' = f_c/k$ gesteuert wird. Die Abtastung der Vorzeichensignale $S_x(t)$ und $S_y(t)$ erfolgt somit im Frequenzverhältnis 1 : k, und man erhält jeweils k Abtastwerte X des Vorzeichensignals $S_x(t)$ für einen Abtastwert Y des Vorzeichensignals $S_y(t)$.

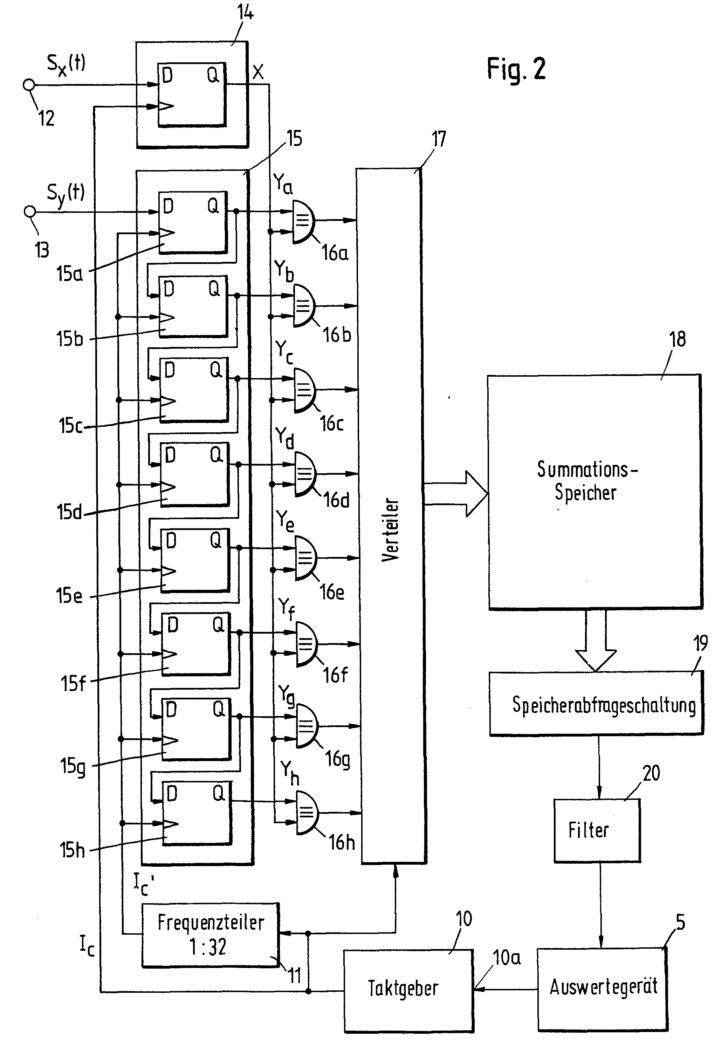

Fig. 2 zeigt eine Ausführungsform des Korrelators 4 von Fig. 1. Bei dieser Ausführungsform sind die Abtastschaltungen mit in den Korrelator einbezogen ; der Korrelator empfängt daher an zwei Eingängen 12, 13 die binären Vorzeichensignale $S_x(t)$ bzw. $S_y(t)$, die von den Signalumformern 6, 7 geliefert werden.

Der Korrelator enthält ein einstufiges X-Register 14, dessen einzige Registerstufe durch ein D-Flipflop gebildet ist, dessen D-Eingang mit dem Eingang 12 verbunden ist und an dessen Clockeingang die Taktimpulse I. vom Taktgeber 10 angelegt sind. Entsprechend der bekannten Funktionsweise eines D-Flipflops nimmt der Q-Ausgang bei der ansteigenden Flanke jedes Taktimpulses I. den in diesem Augenblick am D-Eingang anliegenden Signalwert an, den er bis zum nächsten Taktimpuls I. beibehält. Es ist somit unmittelbar zu erkennen, daß das X-Register 14 die Rolle der Abtastschaltung 8 von Fig. 1 spielt und am Ausgang die durch die aufeinanderfolgenden Abtastungen erhaltenen Abtastwerte X zur Verfügung stellt. Diese einfache Ausbildung der Abtastschaltung ist möglich, weil es sich bei dem abzutastenden Vorzeichensignal $S_x(t)$ um ein binäres Signal handelt.

Ferner enthält der Korrelator ein mehrstufiges Y-Register 15 mit acht Registerstufen 15a bis 15h, die ebenfalls durch D-Flipflops gebildet sind. Das Y-Register 15 ist als Schieberegister ausgebildet, indem jeweils der Q-Ausgang jeder der Registerstufen 15a bis 15g mit dem D-Eingang der folgenden Registerstufe 15b bis 15h verbunden ist, während die Clockeingänge aller Registerstufen 15a bis 15h parallel an den Ausgang des Frequenzteilers 11 angeschlossen sind. Der D-Eingang der ersten Registerstufe 15a ist mit dem Eingang 13 verbunden.

Beim Anlegen eines Taktimpulses I.' an den Takteingang des D-Flipflops der Registerstufe 15a nimmt der Q-Ausgang den Signalwert des Vorzeichensignals $S_y(t)$ an, der im gleichen Augenblick am D-Eingang anliegt ; dieser Signalwert bleibt als Abtastwert $Y_a$ am Ausgang der Registerstufe 15a bis zum Erscheinen des nächsten Taktimpulses I.' bestehen. Es ist somit zu erkennen, daß die Registerstufe 15a die Rolle der Abtastschaltung 9 von Fig. 1 für das Vorzeichensignal $S_y(t)$ spielt.

Der gleiche Taktimpuls I.', der die Abtastung des Vorzeichensignals $S_y(t)$ in der Registerstufe 15a bewirkt, löst auch die Übertragung des Inhalts jeder der Registerstufen 15a bis 15g in die nächste Registerstufe 15b bis 15h aus. Somit steht im Zeitintervall zwischen zwei Taktimpulsen I.' am Ausgang der Registerstufe 15a der mit dem letzten Abtastimpuls I.' erhaltene Abtastwert $Y_a$ zur Verfügung : am Ausgang der Registerstufe 15b steht ein Abtastwert $Y_b$ zur Verfügung, der mit dem vorhergehenden Taktimpuls $I_c'$ abgetastet worden ist, und in entsprechender Weise stehen an den Ausgängen der Registerstufen 15c bis 15h Abtastwerte $Y_c$ bis $Y_h$ zur Verfügung, die jeweils um eine Periode der Taktimpulse $I_c'$ früher liegen als der in der vorhergehenden Registerstufe stehende Abtastwert. Mit anderen Worten : im Y-Register 15 sind gleichzeitig die jeweils acht letzten Abtastwerte des Vorzeichensignals $S_y(t)$ gespeichert, und sie stehen an den Ausgängen der acht Registerstufen parallel zur Verfügung.

Als Beispiel ist angenommen daß der Frequenzteiler 11 das Teilerverhältnis 1 : 32 hat, so daß also gilt $k = 32$. Für jeden neuen Abtastwert Y des Vorzeichensignals $S_y(t)$ werden also 32 Abtastwerte X des Vorzeichensignals $S_x(t)$ am Ausgang des X-Registers 14 erhalten.

Den acht Registerstufen 15a bis 15h des Y-Registers 15 sind acht Multiplizierer 16a bis 16h zugeordnet, die jeweils am ersten Eingang mit dem Q-Ausgang des D-Flipflops der zugeordneten Registerstufe 15a bis 15h verbunden sind, während die zweiten Eingänge aller acht Multiplizierer 16a bis 16h parallel an den Q-Ausgang des D-Flipflops des X-Registers 14 angeschlossen sind. Da die zu multiplizierenden Signale einfache Binärsignale sind, ist jeder der Multiplizierer 16a bis 16h durch eine digitale Verknüpfungsschaltung gebildet. Bei dem dargestellten Beispiel ist jeder Multiplizierer eine Äquivalenzschaltung, d. h. eine digitale Verknüpfungsschaltung, die am Ausgang den Signalwert 1 liefert, wenn ihre beiden Eingangssignale den gleichen Signalwert (0 oder 1) haben, während das Ausgangssignal den Signalwert 0 hat, wenn die beiden Eingangssignale verschiedene Signalwerte haben. Im Hinblick auf die Bildung der an den Eingängen jedes Multiplizierers anliegenden Abtastwerte X und Y bedeutet dies, daß als Multiplikationsergebnis der Signalwert 1 erhalten wird, wenn die beiden abgetasteten Signale im Abtastzeitpunkt beide positiv oder beide negativ waren, während als Multiplikationsergebnis der Signalwert 0 erhalten wird, wenn die beiden abgetasteten Signale im Abtastzeitpunkt entgegengesetzte Polaritäten hatten. Diese Art der digitalen Verknüpfung ergibt eine « stochastische » Multiplikation.

Die Ausgänge der Multiplizierer 16a bis 16h sind mit den Eingängen einer Verteilerschaltung 17 verbunden, welche die von den Multiplizierern als Multiplikationsergebnisse gelieferten binären Signale in einer später erläuterten Weise in die Speicherplätze eines Summationsspeichers 18 eingibt. Die Verteilerschaltung 17 kann zu diesem Zweck beispielsweise durch die Taktimpulse I. des Taktgebers 10 synchronisiert sein.

Der Speicher 18 hat $m = k \cdot n$ Speicherplätze, wobei k der bereits zuvor erwähnte Teilerfaktor des Frequenzteilers 11 ist, während n die Anzahl der im Y-Register 15 gespeicherten letzten Abtastwerte Y ist. Im vorliegenden Fall gilt also :

$$k = 32 \; ; \; n = 8 \; ; \; m = 32 \cdot 8 = 256 \text{ Speicherplätze.}$$

Jeder Speicherplatz des Speichers 18 hat eine Kapazität von mehreren Bits, und die Ausbildung ist so getroffen, daß die nacheinander in den gleichen Speicherplatz eingegebenen Bits jeweils zum vorhergehenden Inhalt addiert werden können. Wie später noch erläutert wird, stellt der Inhalt jedes Speicherplatzes einen Stützwert der Korrelationsfunktion dar. Eine mit dem Speicher 18 verbundene Speicherabfrageschaltung 19 ermöglicht die Abfragung der Speicherplätze und dadurch die Gewinnung der Korrelationsfunktion. Der Ausgang der Speicherabfrageschaltung 19 ist mit dem Auswertegerät 5 (Fig. 1) verbunden.

5

Die Zahlenwerte k, n und m sind bei dem zuvor angegebenen Beispiel Potenzen von 2, wobei gilt :

$$n = 2^3 = 8 \; ; \; m = 2^8 = 256 \; ; \; k = 2^5/n = 32.$$

Die Wahl dieser Zahlenwerte ist zweckmäßig, weil dann für die verschiedenen Schaltungsbestandteile im Handel erhältliche integrierte Schaltungen verwendet werden können. Der Frequenzteiler 11 kann ein 5-stufiger Binärzähler sein. Die Verteilerschaltung 17, der Speicher 18 und die Speicherabfrageschaltung 19 sind vorzugsweise durch einen Mikrocomputer mit der Wortlänge von n Bits gebildet, der entsprechend programmiert ist.

Die am Schluß der Beschreibung angefügte Tabelle I zeigt die im Verlauf mehrerer aufeinanderfolgender Abtastzyklen im X-Register 14 und im Y-Register 15 erscheinenden Abtastwerte X bzw. Y. Am Kopf der Tabelle sind die Abtastzeiten angegeben, die den Perioden der Taktimpulse I entsprechen. Diese Abtastzeiten sind mit $t_0$, $t_1$, $t$ ... bezeichnet, wobei von einer beliebigen Abtastzeit $t_0$ ausgegangen wird, in welcher gleichzeitig ein Impuls I und ein Impuls I' erscheinen. Ein Abtastzyklus entspricht jeweils einer Periode der langsamen Taktimpulse I', also 32 Perioden der schnellen Taktimpulse I. Aus Platzgründen sind jeweils nur die ersten und letzten Abtastzeiten in jedem Abtastzyklus dargestellt.

Die Abtastwerte X und Y sind mit einem Index versehen, der die Abtastzeit bezeichnet, in welcher der Abtastwert abgetastet worden ist. Für jede Abtastzeit $t_0$, $t_1$, $t$ ... erscheint im X-Register 14 ein Abtastwert $X_0$, $X_1$, $X_2$..., der den gleichen Index wie die Abtastzeit trägt.

Da in der Abtastzeit $t_0$ auch eine Abtastung des Signals $S(t)$ erfolgt, erscheint in dieser Abtastzeit am Ausgang der Stufe 15a des Y-Registers 15 ein Abtastwert $Y_0$. Dieser Abtastwert bleibt bis zur Abtastzeit $t_{31}$ unverändert.

Der Abtastwert, der zuvor in der Stufe 15a stand, ist am Beginn der Abtastzeit $t_0$ in die Stufe 15b übertragen worden. Dieser Abtastwert ist 32 Abtastzeiten früher erhalten worden und wird dementsprechend mit $Y_{-32}$ bezeichnet. Der Abtastwert $Y_{-32}$ bleibt bis zum Ende des Abtastzyklus am Ausgang der Stufe 15b bestehen.

In entsprechender Weise bestehen während des ganzen Abtastzyklus an den Ausgängen der Stufen 15c bis 15h Abtastwerte $Y_{-64}$, $Y_{-96}$, $Y_{-128}$, $Y_{-160}$, $Y_{-192}$, $Y_{-224}$, die jeweils um 32 Abtastzeiten früher erhalten worden sind als der in der vorhergehenden Stufe stehende Abtastwert.

Der nächste Abtastzyklus beginnt mit der Abtastzeit $t_{32}$. Am Beginn dieser Abtastzeit erscheint wieder ein Taktimpuls I' gleichzeitig mit einem Taktimpuls I, so daß gleichzeitig mit dem Abtastwert $X_{32}$ im X-Register 14 ein neuer Abtastwert $Y_{32}$ in der Stufe 15a des Y-Registers 15 erscheint. Gleichzeitig werden die bisherigen Inhalte der Stufen des Y-Registers 15 um eine Stufe verschoben, so daß nunmehr der Abtastwert $Y_0$ in der Stufe 15b steht, der Abtastwert $Y_{-32}$ in der Stufe 15c usw.

Der gleiche Vorgang wiederholt sich am Beginn jedes neuen Abtastzyklus in den Abtastzeiten $t_{64}$, $t_{96}$..., und die sich daraus ergebenden Abtastwerte, die in den Registern 14 und 15 stehen, sind aus der Tabelle I unmittelbar ersichtlich.

Im Verlauf jedes Abtastzyklus werden die nacheinander im X-Register 14 erscheinenden 32 Abtastwerte X mit den acht im Y-Register 15 stehenden Abtastwerten Y jeweils gleichzeitig in den Multiplizierern 16a bis 16h multipliziert. Die Tabelle II gibt die Verschiebungszeit $\tau$ zwischen den jeweils miteinander multiplizierten Abtastwerten an. Dabei ist angenommen, daß die Periode der Taktimpulse I die Dauer $\Delta\tau$ hat, so daß sich die Verschiebungszeit in Vielfachen von $\Delta\tau$ ergibt.

In der Abtastzeit $t_0$ hat der Abtastwert $X_0$ gegenüber den im Y-Register 15 stehenden Abtastwerten $Y_a$ bis $Y_h$ die folgenden Verschiebungszeiten $\tau$ :

Gegenüber dem Abtastwert $Y_a$ :   0 $\Delta\tau$ ;
gegenüber dem Abtastwert $Y_b$ :  32 $\Delta\tau$ ;
gegenüber dem Abtastwert $Y_c$ :  64 $\Delta\tau$ ;
gegenüber dem Abtastwert $Y_d$ :  96 $\Delta\tau$ ;
gegenüber dem Abtastwert $Y_e$ : 128 $\Delta\tau$ ;
gegenüber dem Abtastwert $Y_f$ : 160 $\Delta\tau$ ;
gegenüber dem Abtastwert $Y_g$ : 192 $\Delta\tau$ ;
gegenüber dem Abtastwert $Y_h$ : 224 $\Delta\tau$.

In der Abtastzeit $t_0$ werden also an den Ausgängen der acht Multiplizierer 16a bis 16h gleichzeitig acht Multiplikationsergebnisse erhalten, die acht verschiedenen Verschiebungszeiten $\tau$ entsprechen, die jeweils um 32 $\Delta\tau$ auseinanderliegen.

Diese Multiplikationsergebnisse werden vom Verteiler 17 in die den betreffenden Verschiebungszeiten zugeordneten Speicherplätze des Speichers 18 eingegeben. Wenn die 256 Speicherplätze mit Nr. 0 bis Nr. 255 numeriert sind, kann so vorgegangen werden, daß jeder Speicherplatz der Verschiebungszeit zugeordnet ist, deren Faktor mit der Nummer des Speicherplatzes übereinstimmt. In diesem Fall wird also das Ausgangssignal des Multiplizierers 16a in den Speicherplatz Nr. O eingegeben, das Ausgangssignal des Multiplizierers 16b wird in den Speicherplatz Nr. 32 eingegeben, und die Ausgangssignale der übrigen Multiplizierer 16c bis 16h werden in die Speicherplätze Nr. 64, Nr. 96, Nr. 128, Nr. 160, Nr. 192, Nr. 224 eingegeben. Wie bereits erwähnt, kann jedes dieser Ausgangssignale, entsprechend der

**0 026 877**

Äquivalenz-Verknüpfung, entweder den Signalwert 0 oder den Signalwert 1 haben. Wenn angenommen wird, daß in der Abtastzeit $t_0$ ein neuer Meßzyklus beginnt und der Speicher 18 vorher gelöscht worden ist, steht also am Ende der Abtastzeit $t_0$ in einigen der zuvor erwähnten acht Speicherplätze die Binärziffer 1, während die übrigen Speicherplätze leer sind.

In der folgenden Abtastzeit $t_1$ sind die Abtastwerte $Y_a$ bis $Y_h$ unverändert, aber der Abtastwert $X_i$ entspricht einer um $\Delta\tau$ späteren Abtastung. Somit bestehen nunmehr zwischen den stochastisch multiplizierten Abtastwerten die Verschiebungszeiten 1 $\Delta\tau$, 33 $\Delta\tau$, 65 $\Delta\tau$, 97 $\Delta\tau$, 129 $\Delta\tau$, 161 $\Delta\tau$, 193 $\Delta\tau$, 225 $\Delta\tau$. Die Multiplikationsergebnisse werden vom Verteiler 17 in die Speicherplätze Nr. 1, Nr. 33, Nr. 65, Nr. 97, Nr. 129, Nr. 161, Nr. 161, Nr. 193 bzw. Nr. 225 eingegeben.

In jeder der aufeinanderfolgenden weiteren Abtastzeiten werden in entsprechender Weise gleichzeitig acht Multiplikationsergebnisse für Verschiebungszeiten erhalten, die jeweils um $\Delta\tau$ größer als die der vorhergehenden Abtastzeit entsprechenden Verschiebungszeiten sind. Diese Multiplikationsergebnisse werden nacheinander in alle Speicherplätze des Speichers 18 eingegeben, bis schließlich in der letzten Abtastzeit $t_{31}$ des betreffenden Abtastzyklus acht Multiplikationsergebnisse für Verschiebungszeiten von 31 $\Delta\tau$, 63 $\Delta\tau$, 95 $\Delta\tau$, 127 $\Delta\tau$, 159 $\Delta\tau$, 191 $\Delta\tau$, 223 $\Delta\tau$, 255 $\Delta\tau$ erhalten werden, die in die letzten acht Speicherplätze Nr. 31, Nr. 63, Nr. 95, Nr. 127, Nr. 159, Nr. 191, Nr. 223 und Nr. 255 des Speichers 18 eingegeben werden. Am Ende dieses Abtastzyklus ist somit in jeden Speicherplatz des Speichers 18 ein Multiplikationsergebnis eingegeben worden, das entweder den Wert 0 oder den Wert 1 hatte.

In der nächsten Abtastzeit $t_{1,}$ welche die erste Abtastzeit des folgenden Abtastzyklus ist, bestehen wieder die gleichen Verschiebungszeiten wie in der ersten Abtastzeit $t_0$ des vorhergehenden Abtastzyklus. Die entsprechenden acht Multiplikationsergebnisse werden in die acht Speicherplätze Nr. 0, Nr. 32, Nr. 64, Nr. 96, Nr. 128, Nr. 160, Nr. 192, Nr. 224 eingegeben, in denen bereits die Multiplikationsergebnisse des vorhergehenden Abtastzyklus stehen. Die neuen Multiplikationsergebnisse werden zu dem Inhalt der Speicherplätze addiert, ohne daß dieser gelöscht wird. Der gleiche Vorgang wiederholt sich für die folgenden Abtastzeiten dieses Abtastzyklus, wobei die Inhalte der Speicherplätze, je nach dem Multiplikationsergebnis, entweder unverändert bleiben oder um eine Einheit erhöht werden.

Da jeder Speicherplatz einer bestimmten Zeitverschiebung zwischen den miteinander multiplizierten Abtastwerten zugeordnet ist und in jedem Speicherplatz die Produkte von Abtastwerten summiert werden, die stets der gleichen Zeitverschiebung entsprechen, entspricht offensichtlich der Inhalt jedes Speicherplatzes einem Stützwert der Korrelationsfunktion.

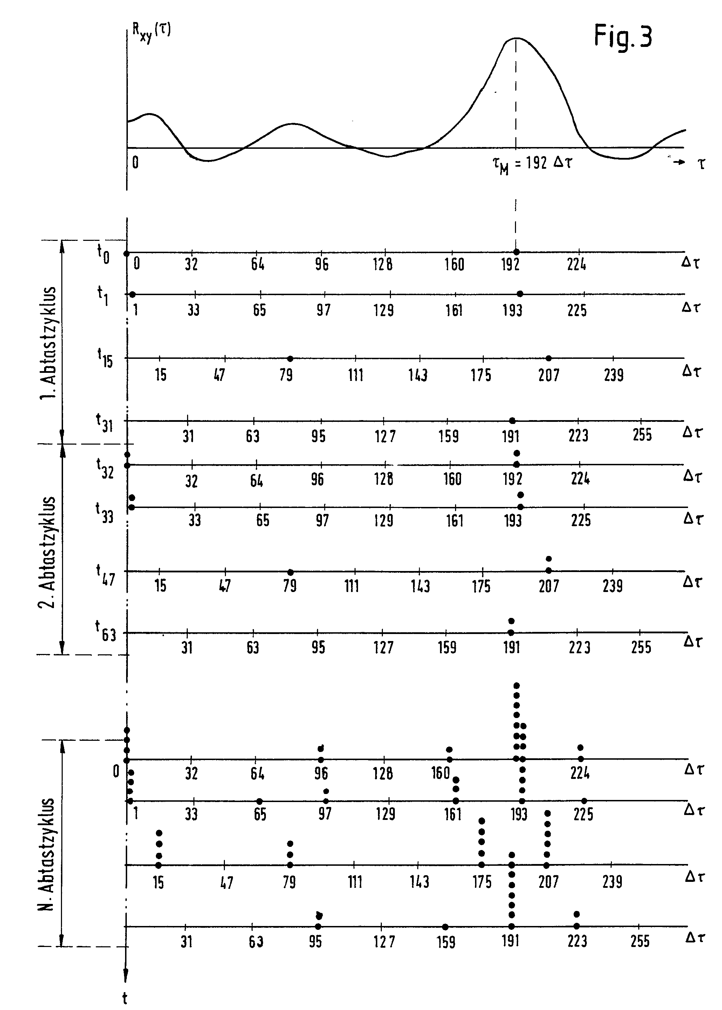

Figur 3 zeigt die allmähliche Entwicklung der Stützwerte der Korrelationsfunktion im Speicher 18.

Am Kopf von Fig. 3 ist eine Korrelationsfunktion $R_{x,}(\tau)$ als Funktion der Verschiebungszeit $\tau$ aufgetragen. Die Korrelationsfunktion hat ein Maximum bei der Verschiebungszeit $\tau_{t,} = 192 \Delta\tau$.

Unter diesem Diagramm ist die Berechnung der Stützwerte in den aufeinanderfolgenden Abtastzyklen dargestellt, wobei zur Vereinfachung in jedem Abtastzyklus nur vier Abtastzeiten gezeigt sind. Die Zeitachse ist vertikal nach unten gerichtet.

In der ersten Abtastzeit $t_0$ des ersten Abtastzyklus erfolgt die gleichzeitige Berechnung von acht Stützwerten der Korrelationsfunktion die bei den Abszissenpunkten 0, 32, 64, 128, 160, 192 und 224 $\Delta\tau$ liegen. Zur Veranschaulichung ist jeder Stützwert, für den das Multiplikationsergebnis 1 erhalten und in die entsprechende Speicherzelle eingegeben worden ist, durch einen schwarzen Punkt dargestellt.

In der nächsten Abtastzeit $t_1$ werden acht weitere Stützwerte der Korrelationsfunktion berechnet, die jeweils um $\Delta\tau$ nach rechts gegen die vorhergehenden Stützwerte versetzt sind und bei 1, 33, 65, 97, 129, 161, 193, 225 $\Delta\tau$ liegen.

Als Beispiel ist noch die Berechnung der Stützwerte in der Abtastzeit $t_{1..}$ in der Mitte des Abtastzyklus und in der letzten Abtastzeit $t_{31}$ dargestellt.

Am Ende des ersten Abtastzyklus ist somit für 256 Stützwerte der Korrelationsfunktion, die jeweils im Abstand $\Delta\tau$ voneinander liegen, eine Berechnung aufgrund von zwei Abtastwerten durchgeführt worden.

Im zweiten Abtastzyklus wird für die gleichen Stützwerte eine zweite Berechnung durchgeführt. Wenn ein Multiplikationsergebnis 1 in eine Speicherzelle eingegeben wird, in die bereits im vorhergehenden Abtastzyklus ein Ergebnis 1 eingegeben worden ist, kommt zu dem bereits vorhandenen schwarzen Punkt ein zweiter Punkt hinzu.

Nach N Abtastzyklen ist aufgrund der bis dahin summierten Ergebnisse bereits das Maximum der Korrelationsfunktion zu erkennen.

Zur Auswertung der im Speicher 18 stehenden Korrelationsfunktion können die Speicherplätze in vorgebbaren Abständen mit Hilfe der Speicherabfrageschaltung 19 durch das Auswertegerät 5 nach einem Maximum durchsucht werden, wobei die aus diskreten Stützwerten bestehende Korrelationsfunktion gegebenenfalls durch Zwischenschaltung eines Filters 20 geglättet werden kann. Wenn die Schaltungsbestandteile 17, 18, 19 und 5 durch einen Mikrocomputer gebildet sind, kann das Filter 20 durch eine entsprechende Programmierung realisiert werden (Software-Filter). Wenn ein ausreichend signifikantes Korrelationsmaximum erkannt worden ist, wird entweder die Korrelationszeit $\tau_{t,}$ oder die umgerechnete Geschwindigkeit ausgegeben. Dann startet ein neuer Meßzyklus, wobei entweder der Speicher 18 gelöscht wird (summierender Betrieb) oder die im Speicher stehenden Zahlenwerte um einen konstanten Betrag geteilt werden und von diesen Zahlenwerten ausgegangen wird (gleitender Betrieb).

In dem betrachteten Anwendungsfall der korrelativen Geschwindigkeitsmessung entspricht die Zeitverschiebung $\tau_{t,}$ bei der das Maximum der Korrelationsfunktion auftritt, der Laufzeit des Strömungs-

7

mediums vom Sensor 3 zum Sensor 2. Diese Laufzeit wird als ein Vielfaches von $\Delta\tau$ in einem Meßbereich erhalten, der von 0 bis $m \cdot \Delta\tau$ geht, beim beschriebenen Beispiel also von 0 bis 255 $\Delta\tau$. Durch Wahl des Wertes von $\Delta\tau$ kann daher der Meßbereich beliebig festgelegt und verändert werden. Da $\Delta\tau$ gleich der Periode des Taktgebers 10 ist, kann die Festlegung des Meßbereichs auf sehr einfache Weise durch eine entsprechende Einstellung der Frequenz des Taktgebers 10 erfolgen. Der Taktgeber 10 ist daher vorzugsweise so ausgebildet, daß seine Frequenz einstellbar ist. Die Frequenzeinstellung kann entweder durch eine Bedienungsperson von Hand erfolgen, oder auch automatisch durch ein Steuersignal, das beispielsweise vom Auswertegerät 5 an einen Frequenzsteuereingang 10a des Taktgebers 10 angelegt wird. Eine solche automatische Frequenzsteuerung ist besonders dann vorteilhaft, wenn das Auswertegrät 5, zusammen mit den Schaltungsbestandteilen 17, 18, 19, 20, durch einen Mikrocomputer gebildet ist. In diesem Fall werden auch die Taktimpulse $I_c$ vorzugsweise vom Mikrocomputer geliefert, so daß auch der Taktgeber 10 ein Bestandteil des Mikrocomputers ist. Durch geeignete Programmierung des Mikrocomputers ist es dann möglich, den Meßbereich an den untersuchten Geschwindigkeitsbereich anzupassen, um das Maximum der Korrelationsfunktion in einen günstigen Bereich zu legen und das Auflösungsvermögen des Korrelators optimal auszunutzen. Beispielsweise kann nach einer ersten näherungsweisen Feststellung der Lage des Korrelationsmaximums die Korrelationsfunktion durch Vergrößerung der Frequenz des Taktgebers 10 so gespreizt werden, daß nur noch der das Maximum enthaltende Bereich untersucht wird.

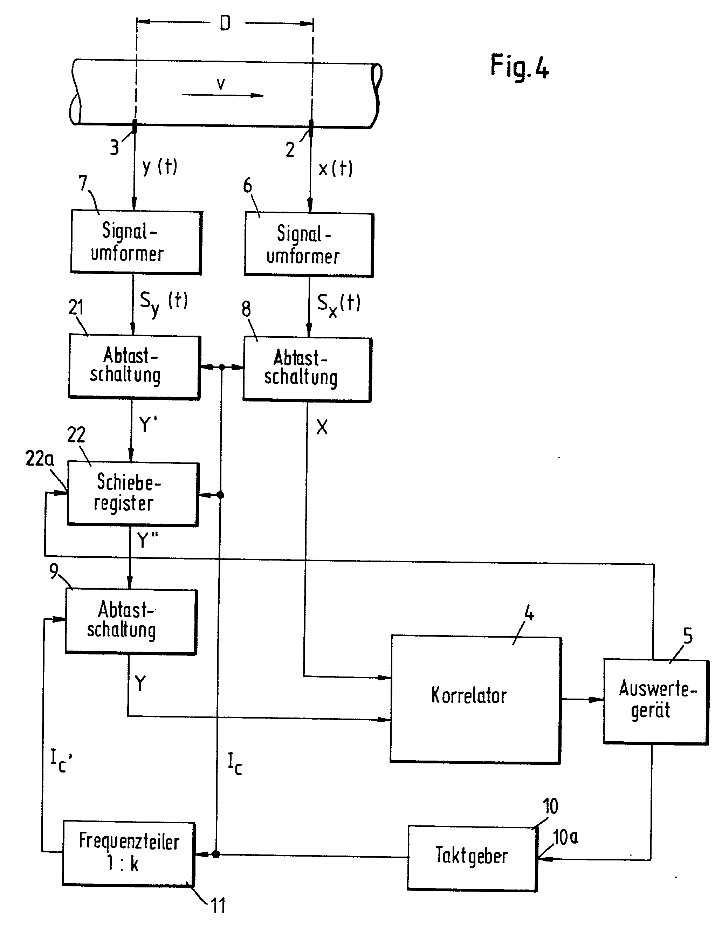

Diese Möglichkeit der Auswahl des untersuchten Bereichs der Korrelationsfunktion kann dadurch noch erweitert werden, daß dem langsamer abfetasteten Signal vor der Eingabe in das Register noch eine zusätzliche Vorverzögerung erteilt wird, die vorzugsweise einstellbar ist. Fig. 4 zeigt als Beispiel eine Weiterbildung der Anordnung von Fig. 1, mit der diese Vorverzögerung für den hier betrachteten Fall erhalten werden kann, daß die korrelierten Signale Abtastwerte von binären Signalen sind. Zu diesem Zweck ist dem Signalumformer 7 eine Abtastschaltung 21 nachgeschaltet, die durch die schnellen Taktimpulse $I_c$ getaktet wird, und zwischen die Abtastschaltung 21 und die Abtastschaltung 9 ist ein gleichfalls durch die schnellen Taktimpulse $I_c$ getaktetes Schieberegister 22 eingefügt. Am Ausgang der Abtastschaltung 21 erscheinen Abtastwerte Y' synchron mit den Abtastwerten X und mit der gleichen schnellen Folgefrequenz wie diese. Die am Ausgang des Schieberegisters 22 erscheinenden Abtastwerte Y'' sind dagegen gegenüber den Abtastwerten Y' und X um eine Zeit $q \cdot \Delta\tau$ verzögert, wenn q die Anzahl der Stufen des Schieberegisters 22 ist. Aus diesen verzögerten Abtastwerten Y' entnimmt dann die Abtastschaltung 9 mit der langsamen Folgefrequenz der Impulse $I_c'$ die Abtastwerte Y, die im Y-Registers 15 (Fig. 2) gespeichert und mit den Abtastwerten X multipliziert werden.

Da bei dem Ausführungsbeispiel von Fig. 2 das Y-Register 15 die Rolle der Abtastschaltung 9 spielt, ist der Ausgang des Schieberegisters 22 mit der Klemme 13 verbunden, wenn die in Fig. 4 dargestellte Weiterbildung angewendet wird. Im übrigen bleibt die Schaltung von Fig. 2 unverändert.

Die durch das Schieberegister 22 erteilte Vorverzögerung ergibt die Wirkung, daß zwischen den im X-Register 14 erscheinenden Abtastwerten X und den im Y-Register 15 stehenden Abtastwerten $Y_a$ bis $Y_h$ Verschiebungszeiten bestehen, die jeweils um $q \cdot \Delta\tau$ größer als die Verschiebungszeiten sind, die zuvor für das Ausführungsbeispiel von Fig. 1 und 2 erläutert wurden und in der Tabelle II aufgeführt sind. Der Meßbereich geht also nicht mehr von 0 $\Delta\tau$ bis 255 $\Delta\tau$, sondern von $q \cdot \Delta\tau$ bis $(225 + q)\Delta\tau$.

Dadurch ist es zunächst möglich, einen Anfangsbereich der Korrelationsfunktion zu unterdrücken, der von 0 bis $q \cdot \Delta\tau$ geht, wenn in diesem Anfangsbereich kein Korrelationsmaximum zu erwarten ist.

Besonders vorteilhaft ist es, wenn die dem langsamer abgetasteten Signal erteilte Vorverzögerung einstellbar ist, was bei dem Ausführungsbeispiel von Fig. 4 dadurch erreicht werden kann, daß ein Schieberegister 22 verwendet wird, bei dem die Anzahl q der zur Wirkung kommenden Stufen durch ein an einen Steuereingang 22a angelegtes Steuersignal verändert wird. In Verbindung mit der zuvor erwähnten Einstellung der Frequenz des Taktgebers 10 ist es dann möglich, einen interessierenden Abschnitt der Korrelationsfunktion auszuwählen und diesen Abschnitt über den ganzen Meßbereich zu dehnen.

Diese Einstellung der Vorverzögerung kann wiederum durch eine Bedienungsperson von Hand erfolgen, oder auch automatisch durch ein Steuersignal, das vom Auswertegerät 5 an den Steuereingang 22a angelegt wird, wie in Fig. 4 dargestellt ist. Wenn der Korrelator 4 und das Auswertegerät 5 durch einen Mikrocomputer gebildet sind, kann dieser beispielsweise nach der ersten Feststellung eines Korrelationsmaximums, das einen vorgegebenen Mindestwert überschreitet, die Vorverzögerung so einstellen, daß das Maximum in die Mitte des Meßbereichs verschoben wird, und dann die Frequenz des Taktgebers 10 so ändern, daß der das Maximum enthaltende Abschnitt über den ganzen Meßbereich gespreizt wird.

Die Vorverzögerung des langsamer abgetasteten Signals kann natürlich auch auf andere Weise erhalten werden. Sie kann auch direkt dem Analogsignal y(t) erteilt werden, beispielsweise mit Hilfe einer Verzögerungsleitung.

Das zuvor beschriebene Prinzip der parallelen Berechnung von Stützwerten aufgrund von Abtastwerten eines schneller abgetasteten Signals und von mehreren gespeicherten Abtastwerten eines langsamer abgetasteten Signals ist nicht auf den Fall beschränkt, daß es sich um binäre Abtastwerte eines Vorzeichensignals handelt. Es ist ohne weiteres möglich, das gleich Prinzip auch dann anzuwenden, wenn die Abtastwerte Betrag und Vorzeichen des abgetasteten Signalwerts ausdrücken. Bei der

**0 026 877**

Anordnung von Fig. 1 bedeutet dies, daß die Signalumformer 6 und 7 entfallen, so daß die Abtastschaltungen 8 und 9 unmittelbar die Signale x(t) bzw. y(t) abtasten. Ferner sind die Abtastschaltungen 8 und 9 so ausgebildet, daß sie Ausgangssignale liefern, die außer den Vorzeichen auch die Amplitude der abgetasteten Signale wiedergeben, vorzugsweise in binär codierter Form. Wenn die Abtastschaltungen als Analogschaltungen ausgebildet sind, beispielsweise in Form der bekannten Momentanwertspeicher (« Sample & Hold »), ist jeder Abtastschaltung ein Analog-Digital-Umsetzer nachgeschaltet, der den analogen Abtastwert in eine Betrag und Vorzeichen darstellende mehrstellige Binärzahl umwandelt. Jede Registerstufe der Register 14 und 15 in Fig. 2 ist dann so ausgebildet, daß sie eine mehrstellige Binärzahl speichern kann, die den betreffenden Abtastwert darstellt. Desgleichen werden Multiplizierer 16a bis 16h verwendet, die zur Multiplikation mehrstelliger Binärzahlen geeignet sind. Eine solche mehrstellige Auslegung der beschriebenen Schaltung bietet dem Fachmann keine Schwierigkeit.

Es ist auch möglich, das beschriebene Korrelationsverfahren mit analogen Abtastwerten anstatt mit binären oder digital codierten Abtastwerten durchzuführen. In diesem Fall werden außer den Abtastschaltungen auch das Y-Register und die Multiplizierer in Analogtechnik ausgeführt ; beispielsweise kann das Y-Register durch ein analoges Schieberegister nach Art der ladungsgekoppelten Anordnungen (Eimerkettenschaltungen) gebildet sein. Da für die Speicherung und Summierung der Multiplikationsergebnisse auch in diesem Fall vorzugsweise ein digitaler Speicher verwendet wird, werden zwischen die Ausgänge der analogen Multiplizierer und die Eingänge der Verteilerschaltung Analog-Digital-Wandler eingefügt, die im Fall der Verarbeitung von Vorzeichensignalen wieder einfache Schwellenwertgeber und bei mehrstelliger Verarbeitung Quantisierungs- und Codierschaltungen sind.

Bei dem Korrelator von Fig. 2 ist die maximale Frequenz der schnellen Abtastung durch die Arbeitsgeschwindigkeit des Summationsspeichers 18 begrenzt. Die Frequenz $f_c$ der schnellen Abtastung muß nämlich so bemessen sein, daß die in jeder Abtastperiode anfallenden n Multiplikationsergebnisse in die zugeordneten Speicherplätze des Summationsspeichers 18 unter Addition zum vorhergehenden Inhalt eingegeben werden können. Wenn der Korrelator als Verteilerschaltung 17 einen Mikrocomputer enthält, können maximale Abtastfrequenzen von nur etwa 1 000 Hz erreicht werden. Hierdurch ergibt sich eine Beschränkung des Verfahrens auf relativ niederfrequente Signale, so daß in manchen Anwendungsfällen die Auflösung des Korrelationsmaximums und damit die Meßgenauigkeit den Anforderungen nicht genügen.

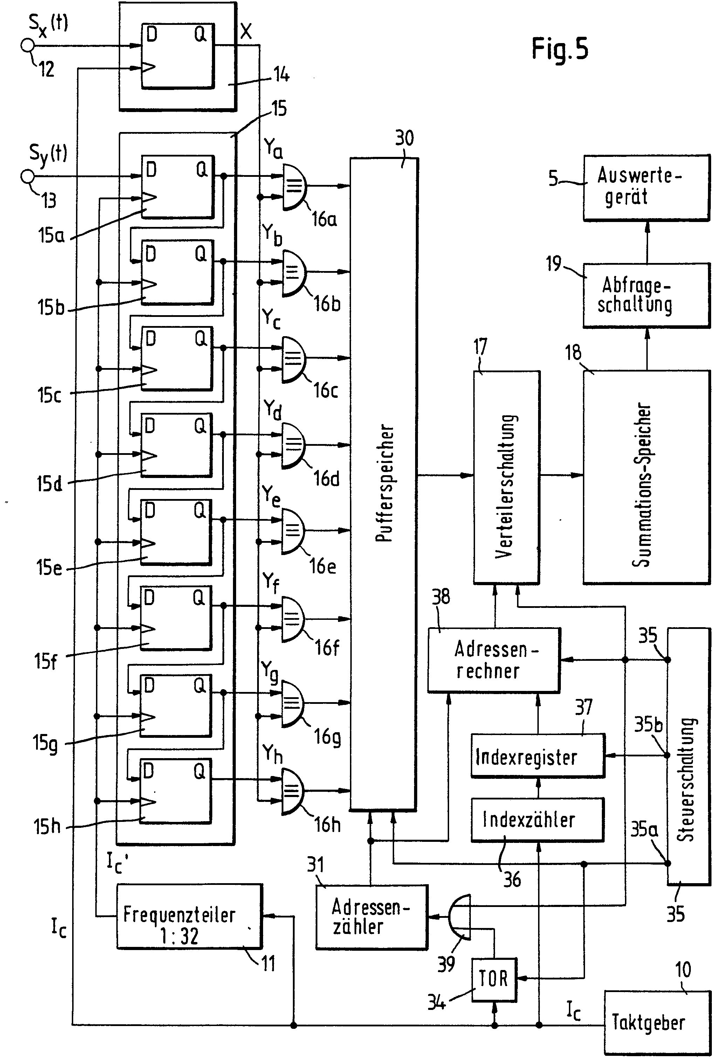

In den Figuren 5 bis 7 ist eine abgeänderte Ausführungsform des Korrelators dargestellt, welche die Berechnung der Korrelationsfunktion etwa in der gleichen Zeit wie mit der Ausführungsform von Fig. 2 ermöglicht, jedoch aufgrund von Abtastwerten, die mit einer sehr viel höheren Abtastfrequenz erhalten werden.

In Fig. 5 sind die Bestandteile des Korrelators, welche die gleichen Funktionen wie die entsprechenden Bestandteile in Fig. 2 haben, mit den gleichen Bezugszeichen bezeichnet. Diese Bestandteile werden nicht noch einmal beschrieben.

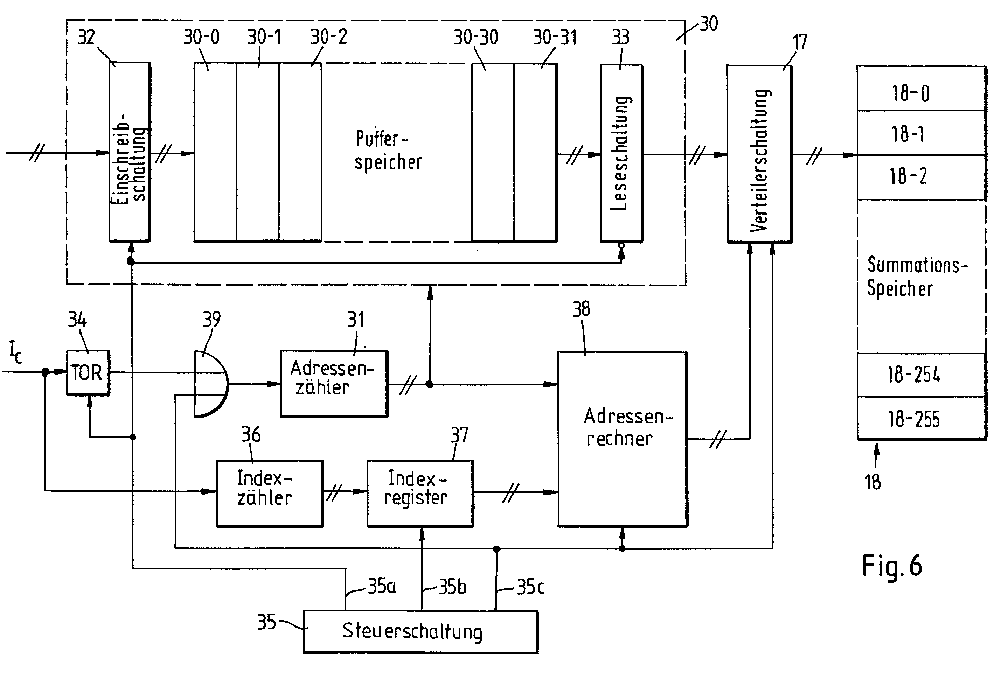

Im Unterschied gegenüber Fig. 2 sind in Fig. 5 die Ausgänge der Multiplizierer 16a bis 16h mit den Dateneingängen eines Pufferspeichers 30 verbunden, dem ein Adressenzähler 31 zugeordnet ist. Der Pufferspeicher 30, der in Fig. 6 in näheren Einzelheiten dargestellt ist, enthält eine Einschreibschaltung 32, eine Leseschaltung 33 und bei dem dargestellten Beispiel k = 32 Speicherplätze 30-0, 30-1, ... 30-31, deren Adressen mit 0,1, ... 31 bezeichnet sind. Jeder Speicherplatz hat eine Kapazität, die für die Aufnahme der gleichzeitig von den Multiplizierern 16a bis 16h gelieferten Multiplikationsergebnisse ausreicht. Da bei dem beschriebenen Beispiel eines Polaritätskorrelators jedes Multiplikationsergebnis durch ein Bit dargestellt ist, benötigt also jeder Speicherplatz des Pufferspeichers 30 eine Kapazität von 8 Bits. Der Adressenzähler 31 ist als « modulo 32 »-Zähler ausgebildet.

Der Adressenzähler 31 hat einen Takteingang, der mit dem Ausgang einer ODER-Schaltung 39 verbunden ist. Der eine Eingang der ODER-Schaltung 39 ist an den Ausgang einer Torschaltung 34 angeschlossen, deren Signaleingang die schnellen Taktsignale $I_c$ vom Taktgeber 10 empfängt. Der Steuereingang der Torschaltung 34 ist an einen Ausgang 35a einer Steuerschaltung 35 angeschlossen, der auch mit einem Freigabeeingang der Einschreibschaltung 32 und mit einem Sperreingang der Leseschaltung 33 verbunden ist.

Ein Indexzähler 36 empfängt die Taktimpulse $I_c'$ so daß er diese Taktimpulse zählt. Der Indexzähler 36 ist als « modulo k »-Zähler ausgebildet, im vorliegenden Fall also als « modulo 32 »-Zähler, der jeweils nach der Zählung von 32 Taktimpulsen $I_c$ in den Zustand Null zurückgestellt wird. Er arbeitet synchron mit dem Frequenzteiler 11, so daß er jeweils dann vom Zählerstand 31 in den Zählerstand Null geht, wenn der Frequenzteiler 11 am Ausgang einen Impuls $I_c'$ abgibt. Der Indexzähler kann also auch durch den Frequenzteiler 11 gebildet sein, wenn dieser — wie üblich — ein fünfstufiger Binärzähler ist. Der Zählerstand des Indexzählers zeigt innerhalb jeder langsamen Abtastperiode der Impulse $I_c'$ die Nummer jeder schnellen Abtastperiode der Impulse $I_c$ an.

Die Stufenausgänge des Indexzählers 36 sind mit den Eingängen eines Indexregisters 37 verbunden, das einen Auslöseeingang hat, der an einen weiteren Ausgang 35b der Steuerschaltung 35 angeschlossen ist. Wenn die Steuerschaltung 35 einen kurzen Impuls an den Auslöseeingang des Indexregisters 37 anlegt, wird der momentane Zählerstand des Indexzählers 36 in das Indexregister 37 übertragen.

Die Stufenausgänge des Indexregisters 37 sind mit entsprechenden Eingängen eines Adressenrech-

9

ners 38 verbunden, der an einer zweiten Eingangsgruppe die die Adresse darstellenden Ausgangssignale des Adressenzählers 31 empfängt.

Die Ausgänge der Leseschaltung 33 des Pufferspeichers 30 sind mit den Eingängen der Verteilerschaltung 17 verbunden, welche die aus dem Pufferspeicher 30 ausgelesenen Signale in diejenigen Speicherplätze des Summationsspeichers 18 eingibt, die durch die vom Adressenrechner 38 gelieferten Adressen bestimmt sind.

Die Übertragung der gespeicherten Daten aus dem Pufferspeicher 30 wird durch Taktsignale gesteuert, die von einem Ausgang 35c der Steuerschaltung 35 geliefert werden. Der Ausgang 35c ist mit dem zweiten Eingang der ODER-Schaltung 39, einem Takteingang des Adressenrechners 38 und einem Takteingang der Verteilerschaltung 17 verbunden.

Der Summationsspeicher 18 hat wieder $m = k \cdot n$ Speicherplätze, bei dem beschriebenen Beispiel also 256 Speicherplätze. Die mit dem Speicher 18 verbundene Speicherabfrageschaltung 19 ermöglicht die Abfragung der Speicherplätze und dadurch die Gewinnung der Korrelationsfunktion. Der Ausgang der Speicherabfrageschaltung 19 ist mit dem Auswertegerät 5 verbunden.

Die Eingabe der Multiplikationsergebnisse in den Pufferspeicher 30 und die Übertragung des Inhalts des Pufferspeichers 30 in den Summationsspeicher 18 erfolgt unter Steuerung durch die Steuerschaltung 35. Dieser Betrieb läuft zyklisch ab, wobei jeder Zyklus aus zwei Phasen besteht. In der Phase I werden die Gruppen von jeweils $n = 8$ Multiplikationsergebnissen, die gleichzeitig an den Ausgängen der Multiplizierer 16a bis 16h erscheinen, im Takt ihres Auftretens, also im Takt der schnellen Abtastfrequenz $f_c$, in den Pufferspeicher 30 eingegeben. Wenn der Pufferspeicher 30 gefüllt ist, beginnt die Phase II, in der die im Pufferspeicher 30 gespeicherten Multiplikationsergebnisse über die Verteilerschaltung 17 in den Summationsspeicher 18 eingeordnet und zu dem vorhergehenden Inhalt der betreffenden Speicherplätze addiert werden. Diese Übertragung geschieht in einem Takt, der durch die Steuerschaltung 35 entsprechend der Arbeitsgeschwindigkeit des Summationsspeichers 18 und der zugehörigen Schaltungen bestimmt ist. Dieser Takt kann wesentlich langsamer sein als der durch die schnelle Abtastfrequenz $f_c$ bestimmte Takt.

Am Beginn der Phase I jedes Zyklus gibt die Steuerschaltung 35 am Ausgang 35b einen kurzen Impuls ab, der die Übertragung des momentanen Zählerstandes des Indexzählers 37 in das Indexregister 38 bewirkt. Auf diese Weise wird die Nummer der schnellen Abtastperiode festgehalten, die den Beginn der Phase I kennzeichnet. Diese Maßnahme ermöglicht es, den Zyklus in jedem beliebigen Zeitpunkt innerhalb einer langsamen Abtastperiode zu beginnen.

Gleichzeitig mit der Abgabe des kurzen Impulses am Ausgang 35b gibt die Steuerschaltung 35 am Ausgang 35a ein Signal ab, das für die ganze Dauer der Phase I bestehen bleibt. Dieses Signal öffnet die Torschaltung 34, gibt die Einschreibschaltung 32 des Pufferspeichers 30 frei und sperrt die Leseschaltung 33.

Der Adressenzähler 31 ist am Ende des vorhergehenden Zyklus auf Null zurückgestellt worden. Beim Öffnen der Einschreibschaltung 32 wird daher die erste Gruppe von $n = 8$ Multiplikationsergebnissen, die zu der im Indexregister 37 stehenden schnellen Abtastperiode gehört, parallel in den Speicherplatz 30-0 des Pufferspeichers 30 eingegeben, der durch die im Adressenzähler 31 stehende Adresse 0 bezeichnet ist.

Infolge des Öffnens der Torschaltung 34 wird der Adressenzähler 31 durch die schnellen Abtastimpulse $I_c$ fortgeschaltet. In der nächsten schnellen Abtastperiode steht daher im Adressenzähler 31 die Adresse 1, und die zu dieser schnellen Abtastperiode gehörige Gruppe von $n = 8$ Multiplikationsergebnissen wird in den Speicherplatz 30-1 des Pufferspeichers 30 eingegeben.

Auf diese Weise werden die an den Ausgängen 16a bis 16h erscheinenden Gruppen von jeweils $n = 8$ Multiplikationsergebnissen parallel in die aufeinanderfolgenden Speicherplätze des Pufferspeichers 30 eingegeben, bis alle $k = 32$ Speicherplätze gefüllt sind. Im Pufferspeicher 30 stehen dann $n \cdot k = m = 256$ Multiplikationsergebnisse, die Stützwerte der Korrelationsfunktion darstellen, und zwar ein Stützwert für jede Stützstelle. Diese 256 Stützwerte sind in 32 aufeinanderfolgenden Abtastperioden der schnellen Abtastung erhalten worden. Die schnelle Abtastfrequenz $f_c$ ist somit lediglich durch die Frequenz begrenzt, mit der Bitgruppen in aufeinanderfolgende Speicherplätze des Pufferspeichers 30 eingegeben werden können.

Die Phase I endet, wenn der Pufferspeicher 30 gefüllt ist, d. h., wenn der Adressenzähler 31 vom Zählerstand 31 in den Zählerstand 0 geht. Das am Ausgang 35a der Steuerschaltung 35 abgegebene Signal nimmt dann einen Wert an, der die Sperrung der Torschaltung 35 und der Einschreibschaltung 32 sowie die Freigabe der Leseschaltung 33 bewirkt.

In der sich anschließenden Phase II arbeiten die Abtastschaltungen 14, 15 und die Multiplizierer 16a bis 16h in der zuvor beschriebenen Weise unter der Steuerung durch die Taktimpulse $I$ und $I'$ weiter ; die von den Multiplizierern 16a bis 16h gelieferten Multiplikationsergebnisse werden jedoch infolge der Sperrung der Einschreibschaltung 32 ignoriert.

Der Indexzähler 36 wird jedoch weiterhin durch die schnellen Taktimpulse $I$ fortgeschaltet, so daß sein Zählerstand in jedem Zeitpunkt die Nummer der schnellen Taktperiode innerhalb der gerade laufenden langsamen Taktperiode anzeigt.

In der Phase II gibt die Steuerschaltung 35 am Ausgang 35c Taktimpulse ab, die den Takteingängen des Adressenzählers 31, des Adressenrechners 38 und des Verteilers 17 zugeführt werden. Diese Taktimpulse haben eine an die Arbeitsgeschwindigkeit des Summationsspeichers 18 angepaßte Folgefrequenz, die wesentlich niedriger sein kann als die Folgefrequenz f. der schnellen Taktimpulse I..

In der ersten Taktperiode der Phase II wird der Inhalt des Speicherplatzes 30-0, der durch die im Adressenzähler 31 stehende Adresse 0 bezeichnet ist, mittels der Leseschaltung 33 entnommen und dem Verteiler 17 zugeführt. Dieser Inhalt besteht aus n = 8 Stützwerten der Korrelationsfunktion, die zu der schnellen Abtastperiode gehören, deren Nummer im Indexregister 37 steht. Der Verteiler 17 ordnet diese acht Stützwerte in die zugeordneten Speicherplätze des Summationsspeichers 18 ein.

In Fig. 6 sind die 256 Speicherplätze des Summationsspeichers 18 mit 18-0, 18-1, ... 18-255 bezeichnet. Zur Vereinfachung wird angenommen, daß der Speicherplatz 18-0 der Stützstelle mit der Verschiebungszeit $0 \Delta\tau$ zugeordnet ist, der Speicherplatz 18-1 der Stützstelle mit der Verschiebungszeit $1 \Delta\tau$, usw. bis zum Speicherplatz 18-255, der der Stützstelle mit der Verschiebungszeit $255 \Delta\tau$ zugeordnet ist.

Die im Indexregister stehende Nummer der ersten schnellen Abtastperiode der Phase I kennzeichnet die Verschiebungszeiten, für welche die in dieser Abtastperiode erhaltenen, im Speicherplatz 30-0 des Pufferspeichers 30 stehenden Stützwerte erhalten worden sind.

Wenn beispielsweise die Phase I in der schnellen Abtastperiode Nr. 29 begann, gelten für die acht Stützwerte dieser Abtastperiode die folgenden Verschiebungszeiten :

Multiplizierer 16a : $(29 + 0.32)\Delta\tau = 29 \Delta\tau$
Multiplizierer 16b : $(20 + 1.32)\Delta\tau = 61 \Delta\tau$
Multiplizierer 16c : $(29 + 2.32)\Delta\tau = 93 \Delta\tau$
Multiplizierer 16d : $(29 + 3.32)\Delta\tau = 125 \Delta\tau$
Multiplizierer 16e : $(29 + 4.32)\Delta\tau = 157 \Delta\tau$
Multiplizierer 16f : $(29 + 5.32)\Delta\tau = 189 \Delta\tau$
Multiplizierer 16g : $(29 + 6.32)\Delta\tau = 221 \Delta\tau$
Multiplizierer 16h : $(29 + 7.32)\Delta\tau = 253 \Delta\tau$

Diese Stützwerte müssen also in die Speicherplätze 18-29, 18-61, 18-93, 18-125, 18-157, 18-189, 18-221, 18-253 des Summationsspeichers 18 unter Addition zu dem vorhergehenden Inhalt eingeordnet werden.

Die Adressen dieser Speicherplätze werden vom Adressenrechner 38 berechnet und dem Verteiler 17 mitgeteilt.

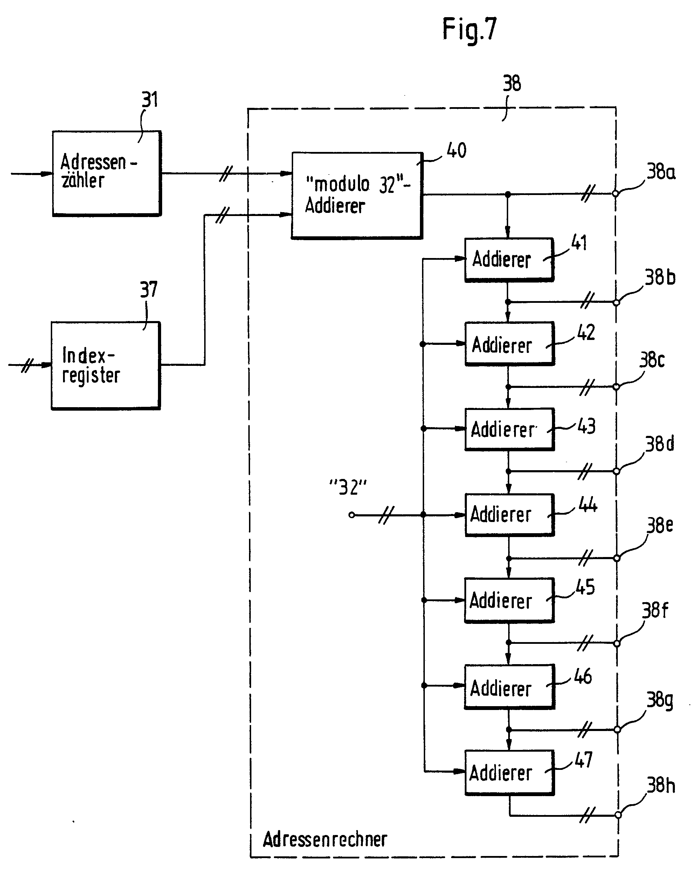

Ein Ausführungsbeispiel des Adressenrechners 38 ist in Fig. 7 dargestellt. Er enthält einen « modulo 32 »-Addierer 40, der an zwei Eingangsgruppen die Ausgangssignale des Adressenzählers 31 und des Indexregisters 37 empfängt. Der Ausgang des « modulo 32 »-Addierers 40, der die « modulo 32 »-Summe der Eingangssignale liefert, stellt direkt den ersten Ausgang 38a des Adressenrechners 38 dar. Dieser Ausgang liefert die Speicheradresse, an welcher der erste Stützwert der jeweils aus dem Pufferspeicher 30 entnommenen Gruppe von acht Stützwerten im Summationsspeicher 18 einzuordnen ist.

Ferner sind an den Ausgang des « modulo 32 »-Addierers 40 sieben Addierschaltungen 41, 42, 43, 44, 45, 46, 47 in Kaskade angeschlossen. Die zweiten Eingänge dieser Addierschaltungen empfangen dauernd ein Signal, das die Zahl « 32 » darstellt. Die Ausgänge dieser Addierschaltungen bilden die Ausgänge 38b, 38c, ... 38h des Adressenrechners.

Somit erscheint am Ausgang 38b eine Adresse, die um 32 größer als die Adresse am Ausgang 38a ist. In entsprechender Weise ist die Adresse an jedem weiteren Ausgang 38c, 38d, ... des Adressenrechners 38 jeweils um 32 größer als die Adresse am vorhergehenden Ausgang. Es ist unmittelbar zu erkennen, daß dadurch die zuvor erläuterten Adressen erhalten werden, an denen die acht Stützwerte einzuordnen sind.

Der Verteiler 17 ordnet die acht Stützwerte jeder Stützwertgruppe nacheinander an den vom Adressenrechner 38 angegebenen Adressen im Summationsspeicher 18 ein. Erst wenn dieser Vorgang abgeschlossen ist, gibt die Steuerschaltung 35 am Ausgang 35c den nächsten Taktimpuls ab.

Durch diesen Taktimpuls wird der Inhalt des Adressenzählers 31 auf 1 gebracht. Die Leseschaltung 33 entnimmt daher den Inhalt des Speicherplatzes 30-1. Der Adressenrechner 38 berechnet aufgrund des neuen Zählerstandes des Adressenzählers 31 die neuen Adressen, bei dem zuvor gewählten Beispiel also die Adressen, 30, 62, 94, 126, 158, 190, 222, 254. Der Verteiler 17 ordnet die acht entnommenen Stützwerte in die entsprechenden Speicherplätze des Summationsspeichers 18 ein.

Wenn der Adressenzähler 31 den Zählerstand 3 erreicht, liefert der Adressenrechner am Ausgang 38a nicht die Adresse 32, sondern — da die Addierschaltung 40 als « modulo 32 »-Addierer ausgeführt ist — die Adresse 0. An den übrigen Ausgängen 38b, 38c, ... 38h erscheinen demzufolge die Adressen 32, 64, 96, 128, 160, 192, 224. Diese Adressen sind den Verschiebungszeiten $0 \Delta\tau$, $32 \Delta\tau$, ... $224 \cdot \Delta\tau$ zugeordnet, was richtig ist, denn die aus dem Speicherplatz 30-3 des Pufferspeichers 30 entnommene Stützwertgruppe gehört zum schnellen Abtastzyklus Nr. 0 des nächsten langsamen Abtastzyklus.

Auf diese Weise werden in der Phase II nacheinander alle 256 Stützwerte aus dem Pufferspeicher 30 entnommen und in den Summationsspeicher 18 gebracht.

Die Phase II ist beendet, wenn die letzte Stützwertgruppe aus dem Speicherplatz 30-31 entnommen und in den Speicher 18 eingeordnet worden ist. Der Adressenzähler 31 geht dann auf 0, und die Steuerschaltung 35 kann die Phase I des nächsten Zyklus in der zuvor beschriebenen Weise einleiten, in welchem wiederum 256 Stützwerte im Takt der schnellen Abtastung erhalten, im Pufferspeicher 30 gespeichert und anschließend in den Summationsspeicher 18 eingebracht werden.

Die beschriebene Funktionsweise ermöglicht eine wesentlich höhere schnelle Abtastfrequenz f als im Fall der direkten Eingabe der Multiplikationsergebnisse in den Summationsspeicher 18, wie sie bei dem Korrelator von Fig. 2 angewendet wird. Dort kann die schnelle Abtastfrequenz nur so groß sein wie im vorliegenden Fall die Folgefrequenz der Taktimpulse am Ausgang 35c der Steuerschaltung 35. Diese Folgefrequenz muß so bemessen sein, daß in jeder Taktperiode nacheinander acht Informationen in verschiedene Speicherplätze des Summationsspeichers 18 unter Addition zu dem vorhergehenden Inhalt eingegeben werden können.

Bei der hier beschriebenen Ausführungsform des Korrelators kann bei gleicher Arbeitsgeschwindigkeit des Summationsspeichers 18 die schnelle Abtastfrequenz mindestens um das n-fache (hier also das achtfache) größer sein, weil in jeder schnellen Taktperiode jeweils 8 Stützwerte parallel in den Pufferspeicher 30 eingegeben werden.

Eine weitere Erhöhung ergibt sich jedoch im allgemeinen noch dadurch, daß die direkte Eingabe von Informationen in einen Speicher schneller durchführbar ist als die Addition zu dem vorhergehenden Inhalt des Speichers, und daß die Eingabe in den Pufferspeicher ungeordnet in aufeinanderfolgende Speicherplätze erfolgt.

Die Verwendung des Indexzählers 36 und des Indexregisters 37 ergibt den Vorteil, daß die Phase I jedes Zyklus in jedem beliebigen Zeitpunkt eingeleitet werden kann, so daß nach Beendung der Phase II des vorhergehenden Zyklus keine Wartezeit verstreicht. Bei einer vereinfachten Ausführungsform können jedoch der Indexzähler 36 und das Indexregister 37 entfallen ; dies setzt voraus, daß die Steuerschaltung 35 die Phase I jeweils in der schnellen Abtastperiode Nr. 0 einer langsamen Abtastperiode einleitet. Dies kann z. B. leicht dadurch geschehen, daß der Zyklus in der Steuerschaltung 35 durch den nächsten langsamen Taktimpuls $I_r'$ ausgelöst wird. Im Adressenrechner 38 kann dann auch der « modulo 32 »-Addierer 40 entfallen, so daß der Ausgang 38a unmittelbar durch den Ausgang des Adressenzählers 31 gebildet ist, an den auch die Addierer 41 bis 47 angeschlossen sind.

Das beschriebene Prinzip der Zwischenspeicherung mittels des Pufferspeichers 30 ist nicht auf den Fall beschränkt, daß die Stützwerte durch Multiplikation von binären Abtastwerten von Vorzeichensignalen gebildet werden und daher jeweils nur aus einem Bit bestehen. Es eignet sich ohne weiteres für den Fall, daß die Abtastschaltungen 14, 15 so ausgebildet sind, daß sie mehrstellige binäre Abtastwerte liefern, die Betrag und Vorzeichen des abgetasteten Signalwerts darstellen. In diesem Fall muß lediglich der Pufferspeicher 30 so ausgebildet sein, daß jeder Speicherplatz n mehrstellige Binärcodegruppen in zugeordneten Abschnitten aufnehmen kann.

Ferner ist es nicht zwingend erforderlich, daß die Kapazität des Pufferspeichers 30 auf k Speicherplätze beschränkt ist ; sie kann auch ein Mehrfaches von k betragen, so daß in jeder Phase I ein Mehrfaches von $m = n \cdot k$ Stützwerten zwischengespeichert werden kann und anschließend in der Phase II jeder Speicherplatz des Summationsspeichers 18 entsprechend mehrfach beschickt wird. Die hierfür erforderliche Abänderung des Adressenrechners 38 bietet dem Fachmann keine Schwierigkeiten.

Die Schaltungsbestandteile des Korrelators von Fig. 5, insbesondere der Pufferspeicher 30, der Adressenzähler 31, die Steuerschaltung 35, der Indexzähler 37, der Adressenrechner 38, der Verteiler 17 und der Summationsspeicher 18, können natürlich auch durch einen geeignet programmierten Mikrocomputer gebildet sein. Der Pufferspeicher 30 ist in diesem Fall vorzugsweise ein Bereich des Arbeitsspeichers (RAM) des Mikrocomputers.

Das zuvor beschriebene Korrelationsverfahren ist natürlich nicht auf die als Beispiel angegebene Kreuzkorrelation von zwei verschiedenen Signalen bei der korrelativen Geschwindigkeitsmessung beschränkt. Es eignet sich grundsätzlich für alle Anwendungsgebiete, auf denen die Kreuzkorrelation von zwei verschiedenen Signalen oder die Autokorrelation eines Signals mit sich selbst durchzuführen ist. Im Fall der Autokorrelation tritt bei allen zuvor beschriebenen Ausführungsbeispielen an die Stelle des Signals y(t) einfach das Signal x(t).

(Siehe Tabellen I, II Seite 13 ff.)

Tabelle I

| Abtastzeit | $t_0$ | $t_1$ | $t_2$ | | $t_{30}$ | $t_{31}$ | $t_{32}$ | $t_{33}$ | | $t_{62}$ | $t_{63}$ | $t_{64}$ | $t_{65}$ | | $t_{94}$ | $t_{95}$ | $t_{96}$ | $t_{97}$ | |
|---|---|---|---|---|---|---|---|---|---|---|---|---|---|---|---|---|---|---|---|
| X-Register 14 | $X_0$ | $X_1$ | $X_2$ | | $X_{30}$ | $X_{31}$ | $X_{32}$ | $X_{33}$ | | $X_{62}$ | $X_{63}$ | $X_{64}$ | $X_{65}$ | | $X_{94}$ | $X_{95}$ | $X_{96}$ | $X_{97}$ | |

| Y-Register 15 | | | |
|---|---|---|---|---|
| Stufe 15a | $Y_0$ | $Y_{32}$ | $Y_{64}$ | $Y_{96}$ |
| Stufe 15b | $Y_{-32}$ | $Y_0$ | $Y_{32}$ | $Y_{64}$ |
| Stufe 15c | $Y_{-64}$ | $Y_{-32}$ | $Y$ | $Y_{32}$ |
| Stufe 15d | $Y_{-96}$ | $Y_{-64}$ | $Y_{-32}$ | $Y_0$ |
| Stufe 15e | $Y_{-128}$ | $Y_{-96}$ | $Y_{-64}$ | $Y_{-32}$ |
| Stufe 15f | $Y_{-160}$ | $Y_{-128}$ | $Y_{-96}$ | $Y_{-64}$ |
| Stufe 15g | $Y_{-192}$ | $Y_{-160}$ | $Y_{-128}$ | $Y_{-96}$ |
| Stufe 15h | $Y_{-224}$ | $Y_{-192}$ | $Y_{-160}$ | $Y_{-128}$ |

0 026 877

Tabelle II

| | $t_0$ | $t_1$ | $t_2$ | $t_3$ | $t_4$ | | $t_{28}$ | $t_{29}$ | $t_{30}$ | $t_{31}$ | $t_{32}$ | $t_{33}$ | | |
|---|---|---|---|---|---|---|---|---|---|---|---|---|---|---|
| | $x_0$ | $x_1$ | $x_2$ | $x_3$ | $x_4$ | | $x_{28}$ | $x_{29}$ | $x_{30}$ | $x_{31}$ | $x_{32}$ | $x_{33}$ | | |
| $Y_a$ | 0 | 1 | 2 | 3 | 4 | | 28 | 29 | 30 | 31 | 0 | 1 | | $\Delta\tau$ |
| $Y_b$ | 32 | 33 | 34 | 35 | 36 | | 60 | 61 | 62 | 63 | 32 | 33 | | $\Delta\tau$ |
| $Y_c$ | 64 | 65 | 66 | 67 | 68 | | 92 | 93 | 94 | 95 | 64 | 65 | | $\Delta\tau$ |
| $Y_d$ | 96 | 97 | 98 | 99 | 100 | | 124 | 125 | 126 | 127 | 96 | 97 | | $\Delta\tau$ |
| $Y_e$ | 128 | 129 | 130 | 131 | 132 | | 156 | 157 | 158 | 159 | 128 | 129 | | $\Delta\tau$ |
| $Y_f$ | 160 | 161 | 162 | 163 | 164 | | 188 | 189 | 190 | 191 | 160 | 161 | | $\Delta\tau$ |
| $Y_g$ | 192 | 193 | 194 | 195 | 196 | | 220 | 221 | 222 | 223 | 192 | 193 | | $\Delta\tau$ |
| $Y_h$ | 224 | 225 | 226 | 227 | 228 | | 252 | 253 | 254 | 255 | 224 | 225 | | $\Delta\tau$ |

# 0 026 877

**Ansprüche**

1. Verfahren zur Korrelation von zwei Signalen (x(t), y(t)), bei welchem gegeneinander zeitverschobene Abtastwerte (X, Y) der beiden Signale miteinander multipliziert werden und zur Bestimmung eines Stützwerts der Korrelationsfunktion der Mittelwert der der gleichen Zeitverschiebung entsprechenden Multiplikationsergebnisse gebildet wird, wobei die jeweils n letzten Abtastwerte (Y₁ bis Yₕ) des zweiten Signals (y(t)) gespeichert werden, jeder Abtastwert (X) des ersten Signals (x(t)) gleichzeitig mit den n gespeicherten Abtastwerten (Y₁ bis Yₕ) des zweiten Signals (y(t)) multipliziert wird und die jeweils der gleichen Zeitverschiebung zwischen den multiplizierten Abtastwerten (X, Y) entsprechenden Multiplikationsergebnisse getrennt summiert werden, dadurch gekennzeichnet, daß das erste Signal (x(t)) mit einer Abtastfrequenz (f_c) abgetastet wird, die ein Vielfaches k der Abtastfrequenz (f_c') ist, mit der das zweite Signal (y(t)) abgetastet wird, und daß die in jedem einer Abtastperiode des zweiten Signals (y(t)) entsprechenden Abtastzyklus durch gleichzeitige Multiplikation der n gespeicherten Abtastwerte (Y₁ bis Yₕ) mit jedem der k aufeinanderfolgenden Abtastwerte (X) des ersten Signals (x(t)) erhaltenen m = k·n Multiplikationsergebnisse in m Speicherplätzen, die den m = k·n unterschiedlichen Zeitverschiebungen zwischen den multiplizierten Abtastwerten zugeordnet sind, getrennt summiert werden.

2. Verfahren nach Anspruch 1, dadurch gekennzeichnet, daß dem langsamer abgetasteten zweiten Signal (y(t)) vor der Speicherung der Abtastwerte (Y) eine Vorverzögerung erteilt wird.

3. Verfahren nach Anspruch 2, dadurch gekennzeichnet, daß die Vorverzögerung einstellbar ist.

4. Verfahren nach einem der Ansprüche 1 bis 3, dadurch gekennzeichnet, daß zur Bildung von m = 2ⁿ Stützwerten der Korrelationsfunktion die beiden Signale (x(t), y(t)) im Frequenzverhältnis k = 2ⁿ/n abgetastet werden, wobei n eine Potenz von 2 ist.

5. Verfahren nach einem der Ansprüche 1 bis 4, dadurch gekennzeichnet, daß jeweils in einer ersten Phase jedes von mehreren aufeinanderfolgenden Abtastzyklen die in jeder Abtastperiode der schnelleren Abtastung gleichzeitig erhaltenen n Multiplikationsergebnisse im Takt der schnellen Abtastung parallel in einen Pufferspeicher (30) eingeschrieben werden, und daß in einer zweiten Phase jedes Abtastzyklus die im Pufferspeicher (30) gespeicherten Multiplikationsergebnisse in einem der Arbeitsgeschwindigkeit des die m Speicherplätze (18-0 bis 18-255) enthaltenden Summationsspeichers (18) angepaßten Takt aus dem Pufferspeicher (30) ausgelesen und auf die m Speicherplätze (18-0 bis 18-255) verteilt werden.

6. Verfahren nach Anspruch 5, dadurch gekennzeichnet, daß in der ersten Phase jedes Abtastzyklus k Gruppen von n gleichzeitigen Multiplikationsergebnissen oder ein ganzzahliges Vielfaches von k Gruppen berechnet und in den Pufferspeicher (30) eingeschrieben werden.

7. Verfahren nach Anspruch 5 oder 6, dadurch gekennzeichnet, daß in der zweiten Phase jedes Abtastzyklus die Abtastung der beiden Signale (x(t), y(t)) und die Bildung der Multiplikationsergebnisse fortgesetzt wird, die Eingabe der Multiplikationsergebnisse in den Pufferspeicher (30) jedoch gesperrt wird.

8. Anordnung zur Durchführung des Verfahrens nach einem der Ansprüche 1 bis 7, gekennzeichnet durch Einrichtungen (8, 9, 10, 11 ; 14, 15a) zur Abtastung der beiden Signale (x(t), y(t)) im Frequenzverhältnis 1 : k, ein Schieberegister (15) mit n Stufen (15a bis 15h) zur Speicherung der n letzten Abtastwerte (Yₐ bis Yₕ) des langsamer abgetasteten Signals (y(t)), n Multiplizierschaltungen (16a bis 16h), die an einem Eingang jeweils den Inhalt einer Schieberegisterstufe (15a bis 15h) und am anderen Eingang parallel die Abtastwerte (X) des schneller abgetasteten Signals (x(t)) empfangen, einen Summationsspeicher (18) mit m = k·n Speichersplätzen, eine Verteilerschaltung (17) zur Eingabe der von den Multiplizierschaltungen (16a bis 16h) gelieferten Multiplikationsergebnisse in die den betreffenden Zeitverschiebungen zugeordneten Speicherplätze unter Addition zu dem vorhergehenden Inhalt, und durch Einrichtungen (10, 11, 13) zur Eingabe der Abtastwerte (Y) des langsamer abgetasteten Signals (y(t)) in die erste Schieberegisterstufe (15a) und zur Verschiebung des Inhalts jeder Schieberegisterstufe in die nächste Schieberegisterstufe im Takt der niedrigeren Abtastfrequenz (f_c').

9. Anordnung nach Anspruch 8, dadurch gekennzeichnet, daß die Verteilerschaltung (17) und der Summationsspeicher (18) durch Bestandteile eines Mikrocomputers gebildet sind.

10. Anordnung nach Anspruch 8 oder 9, dadurch gekennzeichnet, daß jeder Abtasteinrichtung (8, 9 ; 14, 15a) ein Signalumformer (6, 7) zur Umformung des zu korrelierenden Signals (x(t), y(t)) in ein binäres Signal (S_x(t), S_y(t)) vorgeschaltet ist.

11. Anordnung nach Anspruch 10, dadurch gekennzeichnet, daß jede Abtasteinrichtung (14, 15a) durch ein D-Flipflop gebildet ist, dessen D-Eingang mit dem Ausgang des zugeordneten Signalumformers (6, 7) verbunden ist, und an dessen Clockeingang Taktimpulse (I_c') mit einer der zugeordneten Abtastfrequenz entsprechenden Folgefrequenz (f_c') angelegt sind.

12. Anordnung nach Anspruch 11, dadurch gekennzeichnet, daß das die Taktimpulse (I_c') mit der niedrigeren Folgefrequenz (f_c') empfangende D-Flipflop die erste Stufe (15a) des n-stufigen Schieberegisters (15) ist, dessen folgende Stufen (15b bis 15h) gleichfalls durch D-Flipflops gebildet sind, deren D-Eingänge jeweils mit dem Q-Ausgang des D-Flipflops der vorhergehenden Stufe verbunden sind und an deren Clockeingänfe die Taktimpulse mit der niedrigeren Folgefrequenz angelegt sind.

13. Anordnung nach einem der Ansprüche 10 bis 12, dadurch gekennzeichnet, daß jede Multiplizierschaltung (16a bis 16h) durch eine digitale Verknüpfungsschaltung gebildet ist.

15

14. Anordnung nach Anspruch 13, dadurch gekennzeichnet, daß jede digitale Verknüpfungsschaltung (16a bis 16h) eine Äquivalenzschaltung ist.

15. Anordnung nach Anspruch 8 oder 9, dadurch gekennzeichnet, daß jeder Abtasteinrichtung (8, 9) ein Analog-Digital-Wandler zur Umsetzung jedes Abtastwerts in ein mehrstelliges digital codiertes Signal nachgeschaltet ist.

16. Anordnung nach Anspruch 8 oder 9, dadurch gekennzeichnet, daß die Abtasteinrichtungen, das Register und die Multiplizierschaltungen Analogschaltungen sind, und daß jeder Multiplizierschaltung ein Analog-Digital-Wandler nachgeschaltet ist.

17. Anordnung nach einem der Ansprüche 8 bis 16, dadurch gekennzeichnet, daß der Abtasteinrichtung (9) für das langsamer abgetastete Signal (y(t)) eine Verzögerungsschaltung (22) vorgeschaltet ist.

18. Anordnung nach Anspruch 17, dadurch gekennzeichnet, daß die Verzögerungszeit der Verzögerungsschaltung (22) einstellbar ist.

19. Anordnung nach Anspruch 17 oder 18, dadurch gekennzeichnet, daß die Verzögerungsschaltung durch ein Schieberegister (22) gebildet ist, an das Fortschalte-impulse ($I$) im Takt der schnellen Abtastfrequenz ($f$) angelegt sind.

20. Anordnung nach Anspruch 19, dadurch gekennzeichnet, daß dem Schieberegister (22) eine im Takt der schnellen Abtastfrequenz ($f$) gesteuerte Abtastschaltung (21) vorgeschaltet ist.

21. Anordnung nach einem der Ansprüche 8 bis 20, gekennzeichnet, durch einen Taktgeber (10), der Taktimpulse ($I_c$) mit einer der schnellen Abtastfrequenz ($f$) entsprechenden Folgefrequenz liefert, und durch einen dem Taktgeber (10) nachgeschalteten Frequenzteiler (11) mit dem Teilerverhältnis 1: k.

22. Anordnung nach Anspruch 21, dadurch gekennzeichnet, daß die Frequenz des Taktgebers (10) einstellbar ist.

23. Anordnung nach einem der Ansprüche 8 bis 22 zur Durchführung des Verfahrens nach einem der Ansprüche 5 bis 7, gekennzeichnet durch einen zwischen die Multiplizierschaltungen (16a bis 16h) und die Verteilerschaltung (17) eingefügten Pufferspeicher (30) und durch eine Steuerschaltung (35) zur Steuerung der parallelen Eingabe der Multiplikationsergebnisse in den Pufferspeicher (30) im Takt der schnellen Abtastung in der ersten Phase jedes Abtastzyklus und zur Übertragung der gespeicherten Informationen aus dem Pufferspeicher (30) in die Verteilerschaltung (17) in einem vom Takt der schnellen Abtastung unabhängigen Takt in der zweiten Phase jedes Abtastzyklus.

24. Anordnung nach Anspruch 23, dadurch gekennzeichnet, daß der Pufferspeicher (30) k Speicherplätze (30-0 bis 30-31) oder ein Vielfaches von k Speicherplätzen aufweist, von denen jeder Speicherplatz eine für die Aufnahme von n Multiplikationsergebnissen ausreichende Kapazität hat.

25. Anordnung nach Anspruch 24, dadurch gekennzeichnet, daß dem Pufferspeicher (30) ein Adressenzähler (31) zugeordnet ist, dessen Zählerstand die Adresse des Speicherplatzes (30-0 bis 30-31) angibt, der von der Einschreibung oder Ablesung einer Gruppe von Multiplikationsergebnissen betroffen ist.

26. Anordnung nach Anspruch 25, dadurch gekennzeichnet, daß die Steuerschaltung (35) die Fortschaltung des Adressenzählers (31) im Takt der schnellen Abtastung in der ersten Phase jedes Abtastzyklus und im Takt der Übertragung in der zweiten Phase jedes Abtastzyklus steuert.

27. Anordnung nach Anspruch 26, gekennzeichnet durch einen Adressenrechner (38), der in der zweiten Phase jedes Abtastzyklus die den Zählerstand des Adressenzählers (31) anzeigenden Signale empfängt und daraus die Adressen der Speicherplätze (18-0 bis 18-255) des Summationsspeichers (18) berechnet, die den Zeitverschiebungen zugeordnet sind, für welche die Multiplikationsergebnisse erhalten worden sind, die an dem Speicherplatz (30-0 bis 30-31) des Pufferspeichers (30) stehen, dessen Adresse dem Zählerstand des Adressenzählers (31) entspricht.

28. Anordnung nach Anspruch 27, dadurch gekennzeichnet, daß die Steuerschaltung (35) die erste Phase jedes Abtastzyklus gleichzeitig mit dem Beginn einer Periode der langsameren Abtastung auslöst.

29. Anordnung nach Anspruch 27, gekennzeichnet durch einen Indexzähler (36), der dauernd im Takt der schnelleren Abtastung fortgeschaltet wird, und durch ein Indexregister (37), das von der Steuerschaltung (35) am Beginn der ersten Phase jedes Abtastzyklus zur Übernahme des momentanen Zählerstands des Indexzählers (36) ausgelöst wird und dessen Ausgänge mit dem Adressenrechner (38) verbunden sind.

30. Anordnung nach Anspruch 29, dadurch gekennzeichnet, daß der Indexzähler (36) ein « modulo k »-Zähler ist.

31. Anordnung nach Anspruch 30, dadurch gekennzeichnet, daß der Indexzähler durch den für die Frequenzteilung 1 : k verwendeten Frequenzteiler (11) gebildet ist.

32. Anordnung nach einem der Ansprüche 23 bis 31, dadurch gekennzeichnet, daß die Steuerschaltung (35), der Pufferspeicher (30), der Adressenzähler (31), das Indexregister (37) und/oder der Adressenrechner (38) durch Bestandteile eines Mikrocomputers gebildet sind.

33. Anordnung nach einem der Ansprüche 8 bis 32, gekennzeichnet durch ihre Anwendung bei der Bestimmung der Strömungsgeschwindigkeit (v) eines Mediums durch Korrelation von Signalen, die von zwei in vorbestimmtem Abstand voneinander entlang dem Strömungsweg (1) angeordneten Sensoren (2, 3) geliefert werden.

## Claims

1. Method for correlating two signals (x(t), y(t)) by multiplying mutually time-displaced sampling values (X, Y) of the two signals and forming the mean value of the multiplication results corresponding to the same time displacement for determining a discrete value of the correlation function, wherein the respective n last sampling values (Y$_a$ to Y$_h$) of the second signal (y(t)) are stored, each sampling value (X) of the first signal (x(t)) is multiplied simultaneously by the n stored sampling values (Y$_a$ to Y$_h$) of the second signal (y(t)) and the respective multiplication results corresponding to the same time displacement between the multiplied sampling values (X, Y) are separately summed, characterized in that the first signal (x(t)) is sampled with a sampling frequency (f$_c$) which is a multiple k of the sampling frequency (f$_c$') used for sampling the second signal (y(t)), and in that the m = k·n multiplication results obtained in each sampling cycle corresponding to a sampling period of the second signal (y(t)) by simultaneous multiplication of the n stored sampling values (Y$_a$ to Y$_h$) by each of the k successive sampling values (x) of the first signal (x(t)) are separately summed in m storage locations respectively associated with the m = k·n different time displacements between the multiplied sampling values.

2. Method according to claim 1, characterized in that a predelay is imparted to the more slowly sampled signal (y(t)) prior to the storing of the sampling values (Y).

3. Method according to claim 2, characterized in that the predelay is adjustable.

4. Method according to any one of claims 1 to 3, characterized in that to form m = 2$^n$ discrete values of the correlation function the two signals (x(t), y(t)) sampled in the frequency ratio 1 : 2$^n$/n, where n is a power of 2.

5. Method according to any one of claims 1 to 4, characterized in that in a first phase of each of a plurality of successive sampling cycles the n multiplication results obtained simultaneously in each sampling period of the faster sampling are introduced in synchronism with the fast sampling in parallel into a buffer store (30), and that in a second phase of each sampling cycle the multiplication results stored in the buffer store (30) are read from the buffer store (30) in a manner clocked to the working rate of the summation store (18) containing the m storage locations (18-0 to 18-255) and distributed amongst the m storage locations (18-0 to 18-255).

6. Method according to claim 5, characterized in that in the first phase of each sampling cycle k groups of n simultaneous multiplication results or an integral multiple of k groups are calculated and introduced into the buffer store (30).

7. Method according to claim 5 or 6, characterized in that in each second phase of each sampling cycle the sampling of the two signals (x(t), y(t)) and the formation of the multiplication results is continued but the introduction of the multiplication results into the buffer store (30) is blocked.

8. Arrangement for carrying out the method according to any one of claims 1 to 7, characterized by means (8, 9, 10, 11 ; 14, 15a) for sampling the two signals (x(t), y(t)) in the frequency ratio 1 : k, a shift register (15) having n stages (15a to 15h) (Y$_a$ to Y$_h$) for storing the n last sampling values (Y$_a$ to Y$_h$) of the more slowly sampled signal (y(t)), n multiplier circuits (16a to 16h) which each receive at an input the content of a shift register stage (15a to 15h) and at the other input in parallel the sampling values (X) of the more quickly sampled signal (x(t)), a summation store (18) having m = k·n storage locations, a distributing circuit (17) for introducing the multiplication results furnished by the multiplier circuits (16a to 16h) into the storage locations associated with the respective time displacements with addition to the preceding content, and by means (10, 11, 13) for introducing the sampling values (X) of the more slowly sampled signal (y(t)) into the first shift register stage (15a) and for shifting the content of each register stage into the next register stage in time with the lower sampling frequency (f$_c$').

9. Arrangement according to claim 8, characterized in that the distributing circuit (17) and the summation store (18) are formed by components of a microcomputer.

10. Arrangement according to claim 8 or claim 9, characterized in that each sampling means (8, 9 ; 14, 15a) is preceded by a signal converter (6, 7) for converting the signal (x(t), y(t)) to be correlated to a binary signal (S$_x$(t), S$_y$(t)).

11. Arrangement according to claim 10, characterized in that each sampling means (14, 15a) is formed by a D flip-flop whose D input is connected to the output of the associated signal converter (6, 7) and to the clock input of which clock pulses (I$_c$') are applied having a recurrence frequency (f ') corresponding to the associated sampling frequency.

12. Arrangement according to claim 11, characterized in that the D flip-flop receiving the clock pulses (I$_c$') with the lower recurrence frequency (f$_c$') is the first stage (15a) of an n-stage shift register (15) whose following stages (15b to 15h) are also formed by D flip-flops whose D inputs are connected in each case to the Q output of the D flip-flop of the preceding stage and to the clock inputs of which the clock pulses with the lower recurrence frequency are applied.

13. Arrangement according to any one of claims 10 to 12, characterized in that each multiplier circuit (16a to 16h) is formed by a digital logic circuit.

14. Arrangement according to claim 13, characterized in that each digital logic circuit (16a to 16h) is an equivalence circuit.

15. Arrangement according to claim 8 or 9, characterized in that each sampling means (8, 9) is followed by an analog-digital converter for converting each sampling value to a multi-digit digitally coded

17

signal.

16. Arrangement according to claim 8 or 9, characterized in that the sampling means, the register and the multiplier circuits are analog circuits and that each multiplier circuit is followed by an analog-digital converter.

17. Arrangement according to any one of claims 8 to 16, characterized in that the sampling means (9) for the more slowly sampled signal (y(t)) is preceded by a delay circuit (22).

18. Arrangement according to claim 17, characterized in that the delay time of the delay circuit (22) is adjustable.

19. Arrangement according to claim 17 or 18, characterized in that the delay circuit is formed by a shift register (22) to which advancing pulses (l.) are applied in synchronism with the fast sampling frequency ($f_c$).

20. Arrangement according to claim 19, characterized in that the shift register (22) is preceded by a sampling circuit (21) controlled in time with the fast sampling frequency (f.).

21. Arrangement according to any one of claims 8 to 20, characterized by a clock generator (10) which furnishes clock pulses (l.) having a recurrence frequency corresponding to the fast sampling frequency ($f_c$) and a frequency divider (11) following the clock generator (10) and having the division ratio 1 : k.

22. Arrangement according to claim 21, characterized in that the frequency of the clock generator (10) is adjustable.

23. Arrangement according to any one of claims 8 to 22 for carrying out the method according to any one of claims 5 to 7, characterized by a buffer store (30) inserted between the multiplier circuits (16a to 16h) and the distributing circuit (17) and by a control circuit (35) for controlling the parallel introduction of the multiplication results into the buffer store (30) in the first phase of each sampling cycle in time with the fast sampling and for transferring the stored information from the buffer store (30) to the distributing circuit (17) in the second phase of each sampling cycle at a rate independent of the clock frequency of the fast sampling.

24. Arrangement according to claim 23, characterized in that the buffer store (30) has k storage locations (30-0 to 30-31) or a multiple of k storage locations, each of which has a capacity adequate to accomodate n multiplication results.

25. Arrangement according to claim 24, characterized in that associated with the buffer store (30) is an address counter (31) whose count indicates the address of the storage location (30-0 to 30-31) which is affected by the writing in or reading out of a group of multiplication results.

26. Arrangement according to claim 25, characterized in that the control circuit (35) controls the advancing of the address counter (31) with the clock frequency of the fast sampling in the first phase of each sampling cycle and with the clock frequency of the transfer in the second phase of each sampling cycle.

27. Arrangement according to claim 26, characterized by an address computer (38) which in the second phase of each sampling cycle received the signals indicating the count of the address counter (31) and calculates therefrom the addresses of the storage locations (18-0 to 18-255) of the summation store (18) which are associated with the time displacements for which the multiplication results have been obtained which are at the storage location (30-0 to 30-31) of the buffer store (30) whose address corresponds to the count of the address counter (31).

28. Arrangement according to claim 27, characterized in that the control circuit (35) triggers the first phase of each sampling cycle simultaneously with the start of a period of the slower sampling.

29. Arrangement according to claim 27, characterized by an index counter (36) which is continuously advanced in time with the faster sampling and by an index register (37) which is triggered by the control circuit (35) at the start of the first phase of each sampling cycle for taking over the instantaneous count of the index counter (36) and the outputs of which are connected to the address computer (38).

30. Arrangement according to claim 29, characterized in that the index counter (36) is a « modulo k » counter.

31. Arrangement according to claim 30, characterized in that the index counter is formed by the frequency divider (11) used for the frequency division 1 : k.

32. Arrangement according to any one of claims 23 to 31, characterized in that the control circuit (35), the buffer store (30), the address counter (31), the index register (37) and/or the address computer (38) are formed by components of a microcomputer.

33. Arrangement according to any one of claims 8 to 32, characterized by its use in determination of the flow velocity (v) of a medium by correlation of signals which are furnished by two sensors (2, 3) spaced a predetermined distance apart along the flow path (1).

**Revendications**

1. Procédé pour la corrélation de deux signaux {x(t), y(t)}, dans lequel on multiplie entre elles des valeurs d'échantillonnage (X, Y) des deux signaux décalées mutuellement dans le temps, et, pour déterminer une valeur particulière de la fonction de corrélation, on forme la valeur moyenne des résultats

## 0 026 877

de multiplication correspondant au même décalage de temps, on met chaque fois en mémoire les n dernières valeurs échantillonnées (Ya à Yh) du second signal {y(t)}, on multiplie en même temps chaque valeur échantillonnée (X) du premier signal {x(t)} avec les n valeurs échantillonnées mémorisées (Ya à Yh) du second signal {y(t)}, et on totalise séparément les résultats de multiplication correspondant au même décalage dans le temps entre les valeurs échantillonnées multipliées (X, Y), caractérisé en ce qu'on échantillonne le premier signal {x(t)} à raison d'une fréquence d'échantillonnage (fc) qui est un multiple k de la fréquence d'échantillonnage (f'c) à laquelle on échantillonne le second signal {y(t)}, et en ce qu'on totalise séparément dans m cases de mémoire qui sont affectées aux $m = k \cdot n$ différents décalages temporels entre les valeurs échantillonnées multipliées, les $m = k \cdot n$ résultats de multiplication obtenus, dans chaque cycle d'échantillonnage correspondant à une période d'échantillonnage du second signal {y(t)}, par la multiplication simultanée des n valeurs échantillonnées mises en mémoire (Ya à Yh) avec chacune des k valeurs échantillonnées successives (X) du premier signal {x(t)}.

2. Procédé selon la revendication 1, caractérisé en ce qu'on donne un retard préalable au second signal, échantillonné plus lentement, {y(t)} avant la mise en mémoire des valeurs échantillonnées (Y).

3. Procédé selon la revendication 2, caractérisé en ce que le retard préalable est réglable.

4. Procédé selon l'une des revendications 1 à 3, caractérisé en ce que, en vue de former $m = 2^r$ valeurs particulières de la fonction de corrélation, on échantillonne les deux signaux {x(t), y(t)} dans le rapport de fréquences $k = 2^r/n$ dans lequel n est une puissance de 2.

5. Procédé selon l'une des revendications 1 à 4, caractérisé en ce que, dans une première phase de chacun parmi plusieurs cycles successifs d'échantillonnage, on enregistre parallèlement dans une mémoire-tampon (30), à la cadence de l'échantillonnage rapide, les n résultats de multiplication obtenus simultanément dans chaque période d'échantillonnage de l'échantillonnage le plus rapide, et en ce que, dans une seconde phase de chaque cycle d'échantillonnage, on extrait de la mémoire-tampon (30) à une cadence adaptée à la vitesse de travail de la mémoire totalisatrice (18) contenant les m cases de mémoire (18-0 à 18-255), les résultats de multiplication contenus dans la mémoire-tampon (30) et on les répartit dans lesdites m cases (18-0 à 18-255).

6. Procédé selon la revendication 5, caractérisé en ce que, dans la première phase de chaque cycle d'échantillonnage, on calcule et on enregistre dans la mémoire-tampon (30) k groupes de n résultats simultanés de multiplication, ou un multiple entier de k groupes.

7. Procédé selon l'une des revendications 5 ou 6, caractérisé en ce que, dans la seconde phase de chaque cycle d'échantillonnage, on poursuit l'échantillonnage des deux signaux {x(t), y(t)} et l'élaboration des résultats de multiplication, mais on cesse l'introduction desdits résultats dans la mémoire-tampon (30).

8. Dispositif pour la mise en œuvre du procédé selon l'une des revendications 1 à 7, caractérisé par des équipements (8, 9, 10, 11 ; 14, 15a) pour l'échantillonnage des deux signaux {x(t), y(t)} dans le rapport de fréquences de 1 à k, un registre à décalage (15) à n étages (15a à 15h) pour l'enregistrement des n dernières valeurs prélevées (Ya à Yh) du signal {y(t)} échantillonné à la cadence la plus lente, n circuits multiplicateurs (16a à 16h) qui reçoivent chacun à une entrée le contenu d'un étage (15a à 15h) du registre à décalage, et à l'autre entrée en parallèle les valeurs échantillonnées (X) du signal {x(t)} échantillonné à la cadence la plus rapide, une mémoire-totalisatrice (18) avec $m = k \cdot n$ cases de mémoire, un circuit-distributeur (17) pour introduire dans les cases de mémoire affectées aux décalages de temps concernés, et additionner au contenu précédent de ces cases les résultats de multiplication délivrés par les circuits multiplicateurs (16a à 16h), et par des équipements (10, 11, 13) pour introduire les valeurs prélevées (Y) du signal {y(t)} échantillonné à la cadence la plus lente dans le premier étage (15a) du registre à décalage et pour transposer le contenu de chaque étage dudit registre dans l'étage suivant à la cadence de la fréquence d'échantillonnage la plus basse {f'c}.

9. Dispositif selon la revendication 8, caractérisé en ce que le circuit distributeur (17) et la mémoire totalisatrice (18) sont constitués par des éléments d'un microprocesseur.

10. Dispositif selon l'une des revendications 8 ou 9, caractérisé en ce que chaque équipement d'échantillonnage (8, 9 ; 14, 15a) est précédé d'un convertisseur de signal (6, 7) pour convertir en un signal binaire {$S_x(t)$, $S_y(t)$} le signal {x(t), y(t)} à corréler.

11. Dispositif selon la revendication 10, caractérisé en ce que chaque équipement d'échantillonnage (14, 15a) est constitué par une bascule D dont l'entrée D est reliée à la sortie du convertisseur associé de signal (6, 7) et à l'entrée d'horloge duquel sont apppliquées des impulsions d'horloge (l'c) à une fréquence (f'c) correspondant à la fréquence d'échantillonnage associée.

12. Dispositif selon la revendication 11, caractérisé en ce que la bascule D recevant les impulsions d'horloge (l'c) à la fréquence la plus basse (f'c) constitue le premier étage (15a) du registre à décalage (15) à n étages dont les étages suivants (15b à 15h) sont également constitués de bascules D dont les entrées D sont chaque fois reliées à la sortie Q de la bascule D de l'étage précédent, et aux entrées d'horloge desquelles sont appliquées les impulsions d'horloge ayant la fréquence la plus basse.

13. Dispositif selon l'une des revendications 10 à 12, caractérisé en ce que chaque circuit multiplicateur (16a à 16h) est constitué par un circuit logique numérique.

14. Dispositif selon la revendication 13, caractérisé en ce que chaque circuit logique numérique est une porte d'équivalence.

15. Dispositif selon l'une des revendications 8 ou 9, caractérisé en ce que chaque équipement

19

d'échantillonnage (8, 9) est suivi d'un convertisseur-analogique-numérique pour convertir chaque valeur échantillonnée en un signal numérique à plusieurs chiffres codé.

16. Dispositif selon l'une des revendications 8 ou 9, caractérisé en ce que les équipements d'échantillonnage, le registre et les circuits multiplicateurs sont des circuits analogiques et en ce que chaque circuit multiplicateur est suivi d'un convertisseur-analogique-numérique.

17. Dispositif selon l'une des revendications 8 à 16, caractérisé en ce que l'équipement d'échantillonnage pour le signal (y(t)) échantillonné à la cadence la plus basse est suivi d'un circuit à retard (22).

18. Dispositif selon la revendication 17, caractérisé en ce que le temps de retard du circuit à retard (22) est réglable.

19. Dispositif selon l'une des revendications 17 ou 18, caractérisé en ce que le circuit à retard est constitué par un registre à décalage (22) auquel sont appliquées des impulsions d'avancement (I ) à la cadence de la fréquence d'échantillonnage rapide (fc).

20. Dispositif selon la revendication 19, caractérisé en ce que le registre à décalage (22) est suivi d'un circuit d'échantillonnage (21) commandé à la cadence de la fréquence d'échantillonnage rapide (fc).

21. Dispositif selon l'une des revendications 8 à 20, caractérisé par une horloge (10) qui délivre des impulsions d'horloge (I ) avec une fréquence correspondant à la fréquence d'échantillonnage rapide (fc), et par un diviseur de fréquence (11) monté en aval de l'horloge (10) avec un rapport de division de 1 : k.

22. Dispositif selon la revendication 21, caractérisé en ce que la fréquence de l'horloge (10) est réglable.

23. Dispositif selon l'une des revendications 8 à 22 pour la mise en œuvre du procédé selon l'une des revendications 5 à 7, caractérisé par une mémoire-tampon (30) insérée entre les circuits multiplicateurs (16a à 16h) et le circuit distributeur (17), et par un circuit de commande (35) pour commander l'introduction parallèle des résultats de multiplication dans la mémoire-tampon (30) à la cadence d'échantillonnage rapide dans la première phase de chaque cycle d'échantillonnage, et pour transmettre au circuit distributeur (17) dans la seconde phase de chaque cycle d'échantillonnage, à une cadence indépendante de celle d'échantillonnage rapide, les informations enregistrées provenant de la mémoire-tampon (30).

24. Dispositif selon la revendication 23, caractérisé en ce que la mémoire-tampon (30) offre k cases de mémoire (30-0 à 30-31) ou un multiple de k cases dont chacune a la capacité suffisante pour accueillir n résultats de multiplication.

25. Dispositif selon la revendication 24, caractérisé en ce que, à la mémoire-tampon (30), est affecté un compteur d'adresse (31) dont la position indique l'adresse de la case de mémoire (30-0 à 30-31) qui est concernée par l'enregistrement ou la lecture d'un groupe de résultats de multiplication.

26. Dispositif selon la revendication 25, caractérisé en ce que le circuit de commande (35) commande l'avance du compteur d'adresse (31) à la cadence d'échantillonnage rapide dans la première phase de chaque cycle d'échantillonnage, et à la cadence de la transmission dans la seconde phase de chaque cycle d'échantillonnage.

27. Dispositif selon la revendication 26, caractérisé par un calculateur d'adresse (38) qui reçoit dans la seconde phase de chaque cycle d'échantillonnage les signaux indiquant la position du compteur d'adresse (31) d'après lesquels il calcule les adresses des cases de mémoire (18-0 à 18-255) de la mémoire totalisatrice (18) qui sont affectées aux décalages de temps pour lesquels ont été obtenus les résultats de multiplication qui se trouvent à la case de mémoire (30-0 à 30-31) de la mémoire-tampon (30) dont l'adresse correspond à la position du compteur d'adresse (31).

28. Dispositif selon la revendication 27, caractérisé en ce que le circuit de commande (35) déclenche la première phase de chaque cycle d'échantillonnage en même temps que le début d'une période de l'échantillonnage le plus lent.

29. Dispositif selon la revendication 27, caractérisé par un compteur d'index (36) qui est constamment avancé à la cadence de l'échantillonnage le plus rapide, et par un registre d'index (37) qui est déclenché par le circuit de commande (35) au début de la première phase de chaque cycle d'échantillonnage pour recevoir la position instantanée du compteur d'index (36), et dont les sorties sont reliées au calculateur d'adresse (38).

30. Dispositif selon la revendication 29, caractérisé en ce que le compteur d'index (36) est un compteur « modulo k ».

31. Dispositif selon la revendication 30, caractérisé en ce que le compteur d'index est constitué par le diviseur de fréquence (11) utilisé pour la division de fréquence 1 : k.

32. Dispositif selon l'une des revendications 23 à 31, caractérisé en ce que le circuit de commande (35), la mémoire-tampon (30), le compteur d'adresse (31), le registre d'index (37) et/ou le calculateur d'adresse (38) sont constitués par des éléments d'un microprocesseur.

33. Dispositif selon l'une des revendications 8 à 32, caractérisé par leur emploi à déterminer la vitesse (v) d'écoulement d'un milieu par la corrélation de signaux qui sont fournis par deux capteurs (2, 3) disposés à distance mutuelle prédéterminée le long du trajet (1) de l'écoulement.

Fig.1

Fig. 2

0 026 877

Fig. 3

Fig.4

Fig.5

0 026 877

Fig. 6

0 026 877

## Fig.7

**31** Adressen-zähler

**37** Index-register

**38**

**40** "modulo 32"-Addierer

**41** Addierer — 38a

**42** Addierer — 38b

**43** Addierer — 38c

**44** Addierer — 38d

"32"

**45** Addierer — 38e

**46** Addierer — 38f

**47** Addierer — 38g

38h

Adressenrechner

7